(19) Europäisches Patentamt
European Patent Office
Office européen des brevets

(11) **EP 4 102 182 B1**

(12) **FASCICULE DE BREVET EUROPEEN**

(45) Date de publication et mention
de la délivrance du brevet:
**13.08.2025   Bulletin 2025/33**

(21) Numéro de dépôt: **22178187.5**

(22) Date de dépôt: **09.06.2022**

(51) Classification Internationale des Brevets (IPC):
***G01C 19/64*** *(2006.01)*

(52) Classification Coopérative des Brevets (CPC):
**G01C 19/64**

(54) **PUCE ATOMIQUE À DEUX RUBANS CONDUCTEURS POUR CAPTEUR INERTIEL À ATOMES ULTRAFROIDS ET CAPTEUR ASSOCIÉ**

ATOMCHIP MIT ZWEI LEITENDEN BÄNDERN FÜR EINEN TRÄGHEITSSENSOR MIT ULTRAKALTEN ATOMEN UND ENTSPRECHENDER SENSOR

ATOMIC CHIP WITH TWO CONDUCTIVE STRIPS FOR INERTIAL SENSOR WITH ULTRACOLD ATOMS AND ASSOCIATED SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **10.06.2021   FR 2106122**

(43) Date de publication de la demande:
**14.12.2022   Bulletin 2022/50**

(73) Titulaire: **THALES**
**92190 Meudon (FR)**

(72) Inventeurs:
• **WIRTSCHAFTER, Benjamin**
**26027 Valence (FR)**
• **DUPONT-NIVET, Matthieu**
**91767 Palaiseau Cedex (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**WO-A1-2017/089489**

EP 4 102 182 B1

**Description**

**DOMAINE DE L'INVENTION**

La présente invention concerne le domaine des capteurs inertiels à atomes ultrafroids. Plus particulièrement l'invention porte sur des puces et les capteurs associés permettant la mesure d'une vitesse angulaire selon un ou trois axes de mesure.

**ETAT DE LA TECHNIQUE**

Le document WO2017089489 décrit un capteur inertiel (gyroscope) à atomes ultrafroids sur puce utilisant des ondes de matière piégées décrivant des trajectoires fermées incluant une aire, dont la structure et le principe de fonctionnement sont rappelés ci-dessous.

Les mesures de rotation sur ce type de dispositif sont effectuées en exploitant l'effet Sagnac. Le déphasage $\theta$ induit par effet Sagnac entre deux ondes de matière contrarotatives dans un référentiel tournant à la vitesse angulaire $\Omega$, est donné par :

$$\theta = \frac{2Am}{\hbar}\, \Omega \qquad\qquad (1)$$

où $A$ est l'aire inscrite dans les trajectoires atomiques, m la masse des atomes et $\hbar$ la constante de Planck réduite.

On définit par atomes ultrafroids des atomes dont la température est inférieure à 400 nanokelvins, préférentiellement à 300 nanokelvins. La température d'atomes ultrafroids thermiques est, par exemple pour des atomes de Rubidium, comprise entre 50 et 400 nanokelvins et préférentiellement entre 100 et 300 nanokelvins.

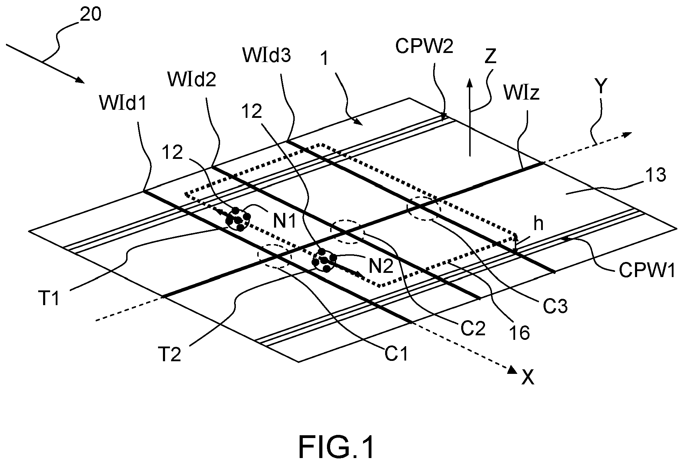

Le principe est de réaliser une trajectoire parcourue de manière contrapropagative par deux nuages d'atomes piégés magnétiquement. La réalisation et le déplacement du piège magnétique selon la trajectoire sont réalisés par des fils conducteurs et des guides microondes selon par exemple la topologie illustrée figure 1.

La figure 1 illustre schématiquement une puce 1 à atomes ultrafroids 12 ainsi que la trajectoire 16 de deux nuages atomiques N1 et N2. Une partie de la surface de la puce 1 forme un plan de mesure 13. Un axe normal au plan de mesure 13 définit l'axe de mesure Z, selon lequel une mesure de rotation $\Omega z$ est réalisée par le gyromètre.

La puce 1 comprend des moyens adaptés à générer un premier piège à atomes ultrafroids T1 et un deuxième piège à atomes ultrafroids T2, un piège permettant d'immobiliser un nuage d'atomes ultrafroids 12 dans un état interne différent de l'autre piège, à une distance prédéterminée h dudit plan de mesure 13. Par exemple le piège T1 comprend les atomes dans le niveau électronique ou état |a> (nuage N1) et le piège T2 comprend des atomes dans l'état |b> (nuage N2). Les niveaux |a> et |b> sont espacés d'une fréquence $\omega_0/2\pi$. Par exemple dans le cas du rubidium 87 il s'agit des deux niveaux hyperfins |F=1,m-$_F$=-1> et |F=2,m-$_F$=1>, espacés d'environ 6,8 GHz.

Ces moyens permettent également de déplacer les nuages selon la trajectoire 16 localisée dans un plan parallèle au plan de mesure 13, à une hauteur h de ce plan, tel qu'illustré figure 1.

Ces moyens sont constitués de guides d'onde et de fils conducteurs tels que décrits ci-dessous.

Les moyens comprennent un premier guide d'onde CPW1 et un deuxième guide d'onde CPW2 adaptés à la propagation de micro-ondes à des pulsations $\omega_a$ et $\omega_b$. Les guides d'onde sont parallèles et disposés symétriquement par rapport à un axe Y du plan de mesure. Les deux guides d'ondes CPW1 et CPW2 sont connectés à au moins un générateur de tension ou de courant à fréquences micro-ondes. Par exemple chacun des guides d'onde est réalisé par le dépôt de trois fils conducteurs parallèles pour réaliser un guide d'onde coplanaire. Dans d'autres réalisations on peut utiliser d'autres types de guides d'onde, en particulier des guides d'onde dont la fabrication est compatible avec les techniques de microfabrication par dépôt ou par gravure. On peut, par exemple, réaliser une ligne à microruban.

Les moyens comprennent également des fils conducteurs intégrés à la puce 1 et adaptés à être traversés par des courants continus. Les fils conducteurs sont répartis en un fil conducteur WIz selon un axe de symétrie Y perpendiculaire à X et compris dans le plan de mesure 13, et en une pluralité de n fils conducteurs WIdi, i indice variant de 1 à n, parallèles entre eux et parallèles à l'axe X, n étant au moins égal à 2. Dans l'exemple de la figure 1 n=3, soit trois fils conducteurs WId1, WId2 et WId3. Les fils sont agencés de manière à définir n points de croisement Ci (croisement entre WIz et WIdi) localisés sur l'axe Y, ici 3 points de croisement C1, C2, C3.

Chaque fil conducteur est relié à un ou plusieurs générateurs de courant et/ou de tension, eux-mêmes reliés à une unité de traitement comportant au moins un microprocesseur. Les générateurs de tension et/ou de courant permettent de piloter aussi bien des courants continus que des courants alternatifs dans les fils. En particulier, des courants continus sont pilotés dans les fils conducteurs.

Dans le capteur, la puce à atomes 1 est placée dans une enceinte à vide entretenu, par exemple, à l'aide d'une pompe ionique et comportant préférentiellement un blindage magnétique. L'enceinte à vide comporte une source d'atomes ultrafroids. La source d'atomes ultrafroids est définie par :

- un émetteur d'atomes (*dispenser* en anglais), par exemple réalisé par un filament chauffant délivrant une vapeur de rubidium ;

- un piège primaire à atomes (optique et/ou magnétique), permettant de pré-refroidir et de disposer un nuage d'atomes ultrafroids au voisinage de la puce, pour charger en atomes les pièges magnétiques T1 et T2 décrits ultérieurement.

L'enceinte à vide comporte également une source de champ magnétique, extérieure à la puce 1. Elle permet d'imposer un champ magnétique homogène et stationnaire 20 sur une épaisseur au moins de l'ordre d'une hauteur h au-dessus du plan de mesure 13. Avantageusement, la direction du champ magnétique homogène est parallèle au plan de mesure.

Sur la figure 1 la trajectoire 16 en pointillés illustre la trajectoire des nuages d'atomes ultrafroids 12. Cette trajectoire fermée définit une aire notée A. Une distance h sépare le plan de la trajectoire 16 et le plan de mesure 13 de la puce. Préférentiellement h est compris entre 500 nm et 1 mm, et préférentiellement entre 5 $\mu$m et 500 $\mu$m.

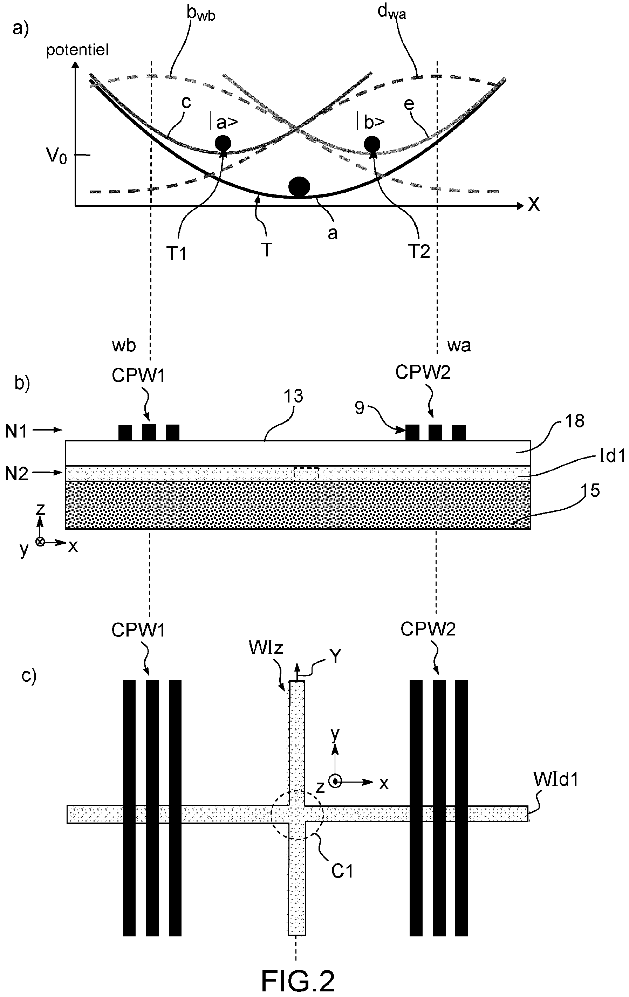

La figure 2 illustre la géométrie des guides et fils de la puce atomique ainsi que les pièges T1 et T2. La génération et principe de fonctionnement de ces pièges sont décrits dans la publication de Ammar et al « Symmetric microwave potential for interferometry with thermal atoms on a chip » Phys. Rev. A91, 053623 (2015).

L'agencement spécifique des fils conducteurs et des guides d'ondes, associé à la source de champ magnétique homogène, permet d'obtenir aisément deux pièges T1 et T2 tels qu'illustrés dans la partie a) de la figure 2. Chaque piège T1 et T2 présente une valeur du minimum V0 non nulle et identique, et une courbure identique, condition nécessaire pour que le capteur fonctionne. En effet, comme expliqué plus loin, lorsqu'un courant continu est appliqué sur au moins deux fils conducteurs d'un point de croisement, le minimum de potentiel est localisé à la verticale de ce point de croisement. Lorsqu'ensuite une puissance hyperfréquence est envoyée dans les guides d'onde, le minimum central se transforme en deux minima de part et d'autre du minimum initial dans la direction des guides d'onde. Si le minimum initial n'est pas situé strictement à égal distance des deux guides d'ondes, les deux minima de potentiels créés n'auront pas rigoureusement la même valeur du minimum V0 et la même courbure.

La partie c) de la figure 2 illustre la disposition des fils conducteurs définissant le point de croisement initial C1 et des guides d'ondes (vue de dessus). La partie b) de la figure 2 décrit la disposition correspondante des fils conducteurs et des guides d'onde imprimés sur une puce en vue de profil, en coupe selon le fil conducteur WId1 qui croise le fil conducteur WIz selon l'axe de symétrie Y. Les guides d'onde CPW1 et CPW2 sont des guides d'onde coplanaires situés sur un premier niveau N1. La couche 18 isolante permet avantageusement d'aplanir le plan de mesure. Le matériau de la couche d'isolant électrique peut être par exemple du dioxyde de silicium, du nitrure de silicium ou benzocyclobutène. Un matériau conducteur est utilisé pour la fabrication des fils conducteurs, par exemple de l'or, et est déposé sur un substrat 15, formant un deuxième niveau N2. Le substrat peut être par exemple en silicium, en nitrure d'aluminium ou en carbure de silicium.

On voit sur la partie a) la séparation symétrique d'atomes ultrafroids, spécifique à l'état interne desdits atomes ultrafroids, et plus précisément les variations de potentiels en fonction de l'axe X de la puce 1.

La courbe « a » en noir présente un puits de potentiel correspondant à l'association du champ magnétique homogène et du champ créé par deux fils conducteurs sécants, le fil WIz parcouru par le courant $I_z$ et le fil WId1 parcouru par le courant Id1. Il résulte un puits de potentiel local formant un piège atomique T selon trois dimensions, un piège magnétique DC. Un nuage d'atomes ultrafroids peut y être piégé et refroidis.

La courbe « b » en pointillés gris clair présente de manière schématique le potentiel créé par la transmission de micro-ondes à la fréquence $\omega_b$ dans le guide d'onde CPW1. Le champ émis par le passage de micro-ondes à la fréquence $\omega_b$ permet de modifier l'énergie des atomes ultrafroids et de déplacer les atomes d'états internes |b>. La courbe « e » en trait continu gris clair illustre le potentiel vu par les états internes |b> dus aux contributions des potentiels illustrés par la courbe « a » et par la courbe « b ». La courbe « e » présente un minimum local de potentiel permettant de piéger localement un nuage d'atomes ultrafroids d'états internes |b>. Ainsi le champ microonde émis à $\omega$b dans CPW1 « pousse » les atomes dans l'état |b> du côté opposé au guide d'onde CPW1.

De manière similaire, la courbe « d » en pointillés gris foncé présente de manière schématique le potentiel créé par la transmission de micro-ondes à la fréquence $\omega_a$ dans le guide d'onde CPW2. Le champ émis par le passage de micro-ondes à la fréquence $\omega_a$ permet de modifier l'énergie des atomes ultrafroids et de déplacer les atomes d'états internes |a>. La courbe « c » en trait continu gris foncé illustre le potentiel vu par les atomes d'états internes |a> dû aux contributions des potentiels illustrés par la courbe « a » et par la courbe « d ». La courbe « c » présente un minimum local d'énergie permettant de piéger localement un nuage d'atomes ultrafroids d'états internes la>. Ainsi le champ microonde émis à $\omega$a dans CPW2 « pousse » les atomes dans l'état |a> du côté opposé au guide d'onde CPW2.

L'association d'un piège magnétique DC (créé par les courants continus dans les fils et le champ homogène 20) et d'un champ micro-onde créé ce qu'on appelle un piège « habillé ». On entend par « habillé » un piège crée au moins en partie par un champ oscillant micro-onde, radio-fréquence ou optique. Les changements des champs micro-ondes (puissance, fréquence et guide dans lequel ils se propagent) permettent de déplacer ce piège habillé et donc de déplacer les atomes. Le piège magnétique DC est représenté sur la figure 2 par la courbe a. Le champ micro-onde à $\omega a$ est représenté sur la figure 2 par la courbe d et le champ micro-onde à $\omega b$ est représenté sur la figure 2 par la courbe b. Le piège habillé T1 (association des courbes a et d pour l'état |a> est représenté par la courbe c et le piège habillé T2 (association des courbes a et b) pour l'état |b> est représenté par la courbe e.

Les nuages d'atomes ultrafroids d'états internes |a> et |b> peuvent être séparés et piégés de manière symétrique par rapport à l'axe de symétrie Y en imposant simultanément la propagation d'ondes de fréquence $\omega_a$ dans CPW2 et $\omega_b$ dans CPW1. Pour obtenir deux pièges dont les minima sont de même valeur V0 et dont les courbures sont de même valeur, il est important que le point de croisement C1 soit disposé à égal distance de CPW1 et CPW2, sur l'axe de symétrie Y.

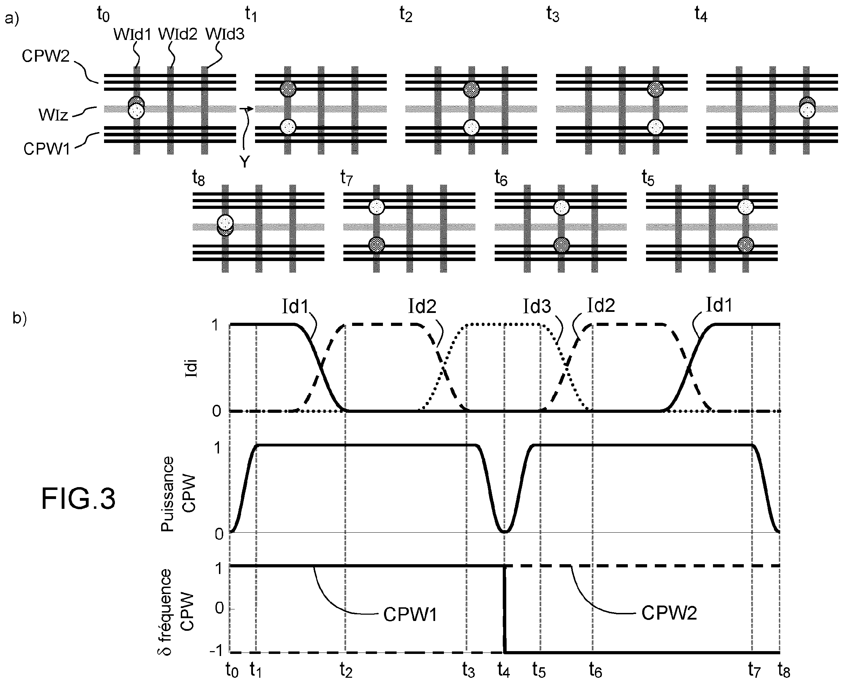

La figure 3 illustre le principe de génération de la trajectoire 16. La partie a) de la figure 3 présente schématiquement une séquence du déplacement de chacun des nuages d'atomes ultrafroids à des temps caractéristiques $t_0$ à $t_8$. La partie b) illustre de manière complémentaire une séquence des différents courants appliqués aux fils conducteurs, des puissances appliquées aux guides d'onde et des fréquences imposées aux guides d'onde, pour les temps correspondant à ceux de la partie a).

Dans la séquence présentée dans la figure 3, le courant $I_z$, non présenté, circulant dans WIz est stationnaire, à une valeur constante. Dans la partie b) les valeurs des courants, des puissances et des fréquences sont arbitraires. L'ordonnée $\delta$ fréquence correspond à une variation de fréquence exprimée en unité arbitraire, autour d'une valeur moyenne de la fréquence. Les courants parcourant les fils conducteurs peuvent être compris entre 100 $\mu$A et 10 A, et les pulsations injectées dans les guides d'onde peuvent être comprises entre 6,6 GHz et 7 GHz dans le cas de l'utilisation d'atomes de rubidium.

Dans une **étape A0,** il y a une phase de préparation des atomes. On génère un nuage d'atomes ultrafroids 12, incluant des phases d'émission desdits atomes, de refroidissement desdits atomes, d'initialisation desdits atomes dans au moins un état interne |a> et de piégeage d'un nuage de dits atomes ultrafroids dans un minimum local de potentiel, à une distance h du plan de mesure (piège T, courbe « a » de la figure 2 partie a)). La hauteur h est différente de 0 car le champ magnétique homogène 20 est non nul. Le piégeage s'effectue par passage de courants continus dans le fil WIz et dans un des fils WIdi, le point de croisement de ces deux fils définissant le point de départ (ici C1 avec WId1). On applique en même temps un champ magnétique de biais 20 parallèle au plan de la puce atomique qui se superpose au champ magnétique créé par les deux fils précédents. Le nuage d'atomes est alors piégé à la verticale de C1, intersection des fils WIz et WId1.

Dans une **étape B0** on initialise les états internes en superposant de manière cohérente lesdits atomes ultrafroids entre ledit état |a> et un état interne |b> par une première impulsion $\pi/2$. Cette impulsion peut être réalisée par un laser, une émission micro-ondes, ou plus généralement par une méthode émettant des ondes à une fréquence de transition adaptée. Les courants $I_Z$ et $I_{d1}$ sont imposés respectivement aux fils conducteurs WIz et WId1. Les deux états internes |a> et |b> sont superposés de manière cohérente et spatialement à l'aplomb du point de croisement C1. Cela correspond à l'instant t0, pour lequel les deux nuages sont dans un même piège T.

La fonction d'onde est alors :

$$\frac{|a> + |b>}{\sqrt{2}} \qquad (2)$$

Dans une **étape C0** on sépare spatialement un nuage d'atomes d'état interne |a> dans un piège T1 d'un nuage d'atomes d'état interne |b> dans un autre piège T2 et on déplace les pièges en sens opposé suivant une trajectoire fermée 16 contenue dans un plan perpendiculaire à l'axe de mesure Z. Le nuage d'atomes d'états internes |a> est symbolisé par un disque de texture foncée et le nuage d'atomes d'états internes |b> est symbolisé par un disque de texture plus claire. Cette étape est réalisée à partir de $t_0$ jusqu'à $t_8$.

Entre $t_0$ et $t_1$ la puissance micro-ondes injectée dans les guides d'onde CPW1 et CPW2, passe progressivement de 0 à sa valeur maximale. Une pulsation $\omega_a$ est envoyée dans le guide d'onde CPW1 et une pulsation $\omega_b$ est envoyée dans le guide d'onde CPW2, ce qui permet de séparer les deux nuages d'états internes différents de part et d'autre de l'axe de symétrie Y, d'une distance d, jusqu'aux positions schématisées dans $t_1$. Le piège T à atomes ultrafroids décrit précédemment à l'instant $t_0$ est alors transformé en deux pièges T1 et T2 à atomes ultrafroids, chaque piège permettant d'immobiliser un nuage d'atomes ultrafroids d'états internes différents de l'autre piège (en l'occurrence d'états internes |a> dans l'un des pièges, par exemple T1, et d'états internes |b> dans l'autre piège T2, comme décrit dans la partie a) de la figure 2.

Un point de croisement Ci correspond au croisement du fil WIz avec le fil WIdi.

Entre $t_1$ et $t_2$ le courant $I_{d1}$ est progressivement coupé et $I_{d2}$ est progressivement porté à sa valeur maximale (l'intervalle de temps séparant $t_1$ et $t_2$ est typiquement de l'ordre de 10 ms et peut être compris entre 0,1 ms et 100 ms : les deux pièges T1 et T2 sont déplacés vers la droite jusqu'aux positions schématisées dans $t_2$

Entre $t_2$ et $t_3$ le courant $I_{d2}$ est progressivement coupé et $I_{d3}$ est progressivement porté à sa valeur maximale : les deux pièges sont déplacés vers la droite jusqu'aux positions schématisées dans $t_3$

Entre $t_3$ et $t_4$ la puissance micro-onde est progressivement coupée : les deux pièges sont ramenés au même endroit de la puce, schématisé dans $t_4$

A $t_4$ les pulsations des deux guides micro-ondes sont modifiées : la pulsation $\omega_b$ est imposée dans CPW1 et la pulsation $\omega_a$ est imposée dans CPW2.

Entre $t_4$ et $t_5$ la puissance dans les deux guides d'onde passe progressivement de 0 à sa valeur maximale : les pièges sont séparés dans la direction verticale comme schématisé dans la figure $t_5$

Entre $t_5$ et $t_6$ le courant $I_{d3}$ est progressivement coupé et $I_{d2}$ est progressivement porté à sa valeur maximale : les deux pièges T1 et T2 sont déplacés vers la gauche jusqu'aux positions schématisées dans $t_6$

Entre $t_6$ et $t_7$ le courant $I_{d2}$ est progressivement coupé et $I_{d1}$ est progressivement porté à sa valeur maximale : les deux pièges sont déplacés vers la gauche jusqu'aux positions schématisées dans $t_7$ Cette opération peut être répétée plusieurs fois avec d'autres premiers fils conducteurs pour augmenter l'aire incluse dans la trajectoire 16.

Entre $t_7$ et $t_8$ la puissance micro-onde dans les guides d'onde est progressivement coupée. Les deux pièges T1 et T2 se déplacent jusqu'à fusionner en un seul piège se situant au point de départ schématisé en $t_0$

On applique ainsi des courants continus aux deux fils correspondant au point de croisement initial C1, et au cours du temps on applique successivement ces courants aux différents points de croisements Ci situés sur l'axe de symétrie, en appliquant simultanément une puissance microonde sur les guides d'ondes.

Pendant l'étape **C0** les courants continus appliqués aux différents fils WIdi varient continûment (augmentation et diminution) entre 0 et une valeur maximale Idimax (normalisée à 1 sur la figure 3), tandis que le champ magnétique 20 et le courant $I_z$ restent constants pendant la séquence. Dans toute la séquence **A0, B0** et **C0** les deux pièges T1 et T2 restent à l'altitude h.

Les deux pièges T1 et T2 se déplacent dans le sens « d'allumage » des points de croisement : du point de croissement C1 vers le point de croisement Cn. Le retour s'effectue en inversant les fréquences microonde et en allument les courants continus successivement dans les fils correspondants aux différents points de croisement en les parcourant de Cn vers C1.

On fait ainsi parcourir aux pièges la trajectoire fermée 16.

La trajectoire fermée 16 des atomes contient alors une aire A, la fonction d'onde atomique est donc :

$$\frac{|a> + \exp(i\varphi)|b>}{\sqrt{2}} \qquad (3)$$

Avec :

$$\varphi = \omega_0 t + \frac{m}{\hbar}\Omega_z A \qquad (4)$$

$\Omega_z$ est la vitesse de rotation angulaire suivant l'axe Z et $\omega_0$ la pulsation correspondante à l'énergie de la transition électronique entre |a> et |b>.

Dans une **étape D0** on recombine les états internes |a> et |b> en appliquant aux atomes ultrafroids une deuxième impulsion $\pi/2$ qui transfert la différence de phase sur les populations des deux niveaux atomiques :

$$p_a = \frac{1}{2}[1 + \cos(\varphi - \omega t)] \qquad (5)$$

$$p_b = \frac{1}{2}[1 - \cos(\varphi - \omega t)] \qquad (6)$$

où $\omega$ est la pulsation de l'impulsion $\pi/2$.

Les impulsions $\pi/2$ peuvent être envoyées aux atomes via les guides micro-ondes ou via un émetteur microonde séparé.

Puis on mesure le nombre d'atomes dans un état interne choisi parmi au moins |a> et |b>. Cette mesure peut être effectuée par exemple par absorption laser en sondant la résonance entre la pulsation propre à un état interne et celle du laser.

Enfin dans une **étape E0** on déterminer la phase Sagnac des atomes ultrafroids et on calcule la vitesse de rotation du capteur selon l'axe Z.

La mesure d'au moins une population d'atomes dans un des états |a> ou |b> permet de déterminer la phase Sagnac, par exemple pour l'état interne |a> en considérant l'équation (5), puis la vitesse de rotation $\Omega_z$ avec l'équation (1).

On dénomme « phase de libre évolution » la partie de la séquence d'interférométrie se situant entre les deux impulsions $\pi/2$ soit l'étape C0.

On peut faire parcourir aux pièges cette trajectoire N fois avant de mesurer la phase Sagnac et ainsi mesurer une phase qui sera potentiellement N fois plus élevée.

Ainsi la mesure s'effectue en déplaçant le minimum du champ magnétique contenant les deux pièges habillés (piège crée au moins en partie par le champ oscillant micro-onde) en variant les courants DC d'une certaine façon dans la matrice de fils présents sur la puce (allumage progressif et extinction progressive des fils DC en croix), de sorte que la plus grande aire possible soit obtenue.

Afin de mettre en œuvre le procédé décrit plus haut le capteur à atomes ultrafroids permettant une mesure de vitesse de rotation $\Omega_z$ comprend :

- une puce atomique 1 telle que décrite précédemment, avec les guides d'onde et les fils conducteurs,

- une source d'atomes pour générer le nuage d'atomes ultrafroids près du plan de mesure 13 de la puce atomique,

- un générateur du champ magnétique homogène 20

- au moins un processeur, au moins un générateur de tension ou de courant continu adapté à commander des courants électriques dans les fils conducteurs et au moins un générateur de tension ou de courant micro-ondes connecté aux guides d'ondes,

- un système de détection d'intensité optique adapté à mesurer au moins une population d'atomes ultrafroids dans un état interne, cette mesure permettant la détermination de la phase Sagnac et de la vitesse de rotation $\Omega_z$.

Ce capteur décrit ci-dessus et dans le document WO2017089489 permet uniquement, à partir d'une trajectoire comprise dans un plan parallèle au plan de mesure 13, une mesure de vitesse de rotation selon l'axe Z perpendiculaire au plan de la puce. Pour pouvoir mesurer la vitesse de rotation selon les trois axes, il est nécessaire de disposer de 3 capteurs de ce type, ce qui est couteux, encombrant et complexe à réaliser, particulièrement pour le positionnement respectif des trois axes (le réglage de leur orthogonalité), ce réglage présentant une dérive temporelle qui diminue la précision de l'ensemble. De plus la mesure de $\Omega z$ nécessite une puce avec plusieurs fils conducteurs parallèles Wldi. La présence de ces multiples fils, auxquels on applique successivement différentes tension continues, complexifie la puce et la séquence de séparation/déplacement des pièges.

Un but de la présente invention est de remédier aux inconvénients précités en proposant une puce atomique simplifiée et des capteurs basés sur cette puce, capables de réaliser une mesure de vitesse de rotation selon l'axe Z, mais également une mesure de vitesse de rotation selon trois axes perpendiculaires X, Y et Z. Par ailleurs une variante de puce et capteur associé présente une sensibilité accrue.

## DESCRIPTION DE L'INVENTION

Selon un premier aspect la présente invention a pour objet une puce atomique pour capteur à atomes ultrafroids, comportant un plan de mesure XY repéré par un axe X et un axe Y orthogonaux, ledit plan de mesure étant normal à un axe Z, la puce atomique comprenant :

- une première paire de guides d'ondes constituée d'un premier et un deuxième guide d'ondes coplanaires, parallèles entre eux et disposés symétriquement de part et d'autre d'un axe dont la projection dans le plan XY est selon l'axe X, dénommés guides selon X,

- une deuxième paire de guides d'ondes constituée d'un premier et un deuxième guide d'ondes coplanaires parallèles entre eux et disposés symétriquement de part et d'autre d'un axe dont la projection dans le plan XY est selon un axe Y' différent de l'axe X, dénommés guides selon Y',

les guides selon X étant isolés électriquement des guides selon Y',

les projections des guides selon X et des guides selon Y' dans le plan XY formant à leur intersection un premier parallélogramme de centre O et présentant une première surface,

- un premier ruban conducteur et un deuxième ruban conducteur agencés de sorte que leur projection respective dans le plan XY forment à leur intersection un deuxième parallélogramme également de centre O et présentant une deuxième surface, lesdits rubans étant adaptés à être traversés par des courants continus,

- une intersection entre la première et la deuxième surface étant supérieure ou égale à 40% de la première surface.

Selon un mode de réalisation le premier et le deuxième ruban sont respectivement orientés selon une première et une deuxième diagonale dudit premier parallélogramme.

Selon un mode de réalisation le premier et le deuxième ruban sont perpendiculaires entre eux.

Selon un mode de réalisation la deuxième paire de guides d'onde est perpendiculaire à ladite première paire de guides d'onde, l'axe Y' étant alors confondu avec l'axe Y.

Selon un mode de réalisation les rubans sont perpendiculaires entre eux et lesdites paires de guide d'onde sont perpendiculaires entre elles et orientées à 45° desdits rubans.

Selon une variante la puce selon l'invention comprend en outre :

- au moins une paire additionnelle de guides selon X plus éloignés de l'axe X que la première paire, et

- au moins une paire additionnelle de guides selon Y' plus éloignés de l'axe Y' que la deuxième paire.

Selon un autre aspect l'invention concerne un capteur à atomes ultrafroids permettant une mesure de vitesse de rotation selon au moins l'axe Z comprenant :

- une puce atomique selon l'invention placée dans une enceinte à vide,

- une source d'atomes agencée pour générer un nuage d'atomes ultrafroids près dudit plan XY de ladite puce atomique,
  lesdits atomes ultrafoids présentant, lors de la phase d'initialisation de la mise en œuvre du capteur, une superposition d'états internes |a> et |b>

- un générateur d'un champ magnétique homogène,

- au moins un processeur, au moins un générateur de tension ou de courant continu connectés audits rubans et au moins un générateur de tension ou de courant micro-ondes connecté audits guides d'ondes,

- lesdits guides d'ondes et lesdits rubans étant configurés, lors de la mise en œuvre du capteur, pour :

  - modifier l'énergie desdits atomes ultrafroids de manière à créer un minima de potentiel pour les atomes ultrafroids dans l'état interne |a> et un minima de potentiel pour les atomes ultrafroids dans l'état interne |b>, formant ainsi un premier (T1) et deuxième (T2) pièges à atomes ultrafroids, un piège permettant d'immobiliser un nuage d'atomes ultrafroids (12) dans un état interne différent de l'autre piège, à une distance maîtrisée dudit plan de mesure, et

  - séparer spatialement les deux pièges et déplacer lesdits pièges suivant au moins une première trajectoire fermée comprise dans un plan perpendiculaire à Z, et parcourue dans un sens par les atomes ultrafroids du premier piège et dans le sens opposé par les atomes ultrafroids du deuxième piège,

  - le capteur comprenant en outre un système de détection d'intensité optique adapté à mesurer au moins une population de dits atomes ultrafroids dans un dit état interne.

Selon un mode de réalisation dans le capteur à atomes ultrafroids selon l'invention, lors de la séquence de séparation et de déplacement desdits pièges :

- les guides selon X de la première paire sont parcourus simultanément par des signaux microondes de pulsations ωa ou ωb, à certains instants dénommés premier ensemble d'instants,

- au moins un des guides selon Y' de la deuxième paire est parcouru par un signal microonde formé de la superposition d'un signal microonde à une pulsation wa' et d'un signal microonde de pulsation ωb', à certains instants dénommés deuxième ensemble d'instants présentant des instants en commun avec le premier ensemble d'instants,

- les rubans étant chacun traversé d'un courant constant pendant la séparation, le déplacement et la recombinaison desdits pièges,

- le cas échéant les guides selon X de ladite au moins une paire additionnelle sont également parcourus simultanément par des signaux microondes de pulsations $\omega a$ ou $\omega b$, à certains instants différents du premier ensemble d'instants.

Selon un mode de réalisation dans le capteur à atomes ultrafroids selon l'invention, lors de la séquence de séparation et de déplacement desdits pièges :

- les guides selon Y' de la deuxième paire sont parcourus simultanément par des signaux microondes de pulsations $\omega a'$ ou $\omega b'$, à certains instants dénommés premier ensemble d'instants,

- au moins un des guides selon X de la première paire est parcouru par un signal microonde formé de la superposition d'un signal microonde à une pulsation $\omega a$ et d'un signal microonde de pulsation $\omega b$, à certains instants dénommés deuxième ensemble d'instants présentant des instants en commun avec le premier ensemble d'instants,

- les premier et deuxième rubans étant chacun traversé d'un courant constant pendant la séparation, le déplacement et la recombinaison des dits pièges,

- le cas échéant les guides selon Y' de l'au moins une paire additionnelle sont également parcourus simultanément par des signaux microondes de pulsations $wa'$ ou $\omega b'$, à certains instants différents du premier ensemble d'instants.

Selon un mode de réalisation le capteur à atomes ultrafroids (20) permet en outre une mesure de vitesse de rotation selon les axes X et Y'. Dans ce capteur les guides d'ondes et les rubans sont en outre configurés,

- pour déplacer lesdits pièges suivant une deuxième trajectoire fermée comprise dans un plan perpendiculaire à X, lors de la mesure de la vitesse de rotation selon l'axe X,

- pour déplacer lesdits pièges suivant une troisième trajectoire fermée comprise dans un plan perpendiculaire à Y', lors de la mesure de la vitesse de rotation selon l'axe Y',

- lesdites trajectoires fermées étant parcourues dans un sens par les atomes ultrafroids du premier piège et dans le sens opposé par les atomes ultrafroids du deuxième piège, les deuxième et troisième trajectoires comprenant chacune au moins une première portion localisée à une première hauteur du plan XY et une deuxième portion localisée à une deuxième hauteur strictement supérieure à la première hauteur.

Selon un mode de réalisation du capteur selon l'invention, lors de la mise en œuvre de la mesure de la vitesse de rotation selon l'axe X par génération de la deuxième trajectoire fermée,

- les guides selon X de la première paire sont parcourus simultanément par des signaux microondes de pulsations $\omega a$ ou $\omega b$, à certains instants dénommé troisième ensemble d'instants,

- les guides selon Y' de la deuxième paire sont simultanément parcourus par un signal microonde formé de la superposition d'un signal microonde à une pulsation $wa'$ et d'un signal microonde de pulsation $\omega b'$ pour opérer un passage de la première hauteur à la deuxième hauteur, à certains instants dénommé quatrième ensemble d'instant présentant des instants en commun avec le troisième ensemble d'instants,

- les premier et deuxième rubans sont chacun traversé d'un courant constant pendant la séparation, le déplacement et la recombinaison des dits pièges,

- le cas échéant les guides selon X de ladite au moins une paire additionnelle sont également sont également parcourus simultanément par des signaux microondes de pulsations $\omega a$ ou $\omega b$, à certains instants différents du troisième ensemble d'instants.

Selon un mode de réalisation du capteur selon l'invention, lors de la mise en œuvre de la mesure de la vitesse de rotation selon l'axe Y' par génération de la troisième trajectoire fermée,

- les guides selon Y' de la deuxième paire sont parcourus simultanément par des signaux microondes de pulsations $\omega a'$ ou $\omega b'$, à certains instants dénommé troisième ensemble d'instants,

- les guides d'ondes selon X de la première paire sont simultanément parcourus par un signal microonde formé de la superposition d'un signal microonde à une pulsation $\omega a$ et d'un signal microonde de pulsation $\omega b$ pour opérer un passage de la première hauteur à la deuxième hauteur, à certains instants dénommé quatrième ensemble d'instant présentant des instants en commun avec le troisième ensemble d'instants,

- les premier et deuxième rubans sont chacun traversé d'un courant constant pendant la séparation, le déplacement et la recombinaison des dits pièges,

- le cas échéant les guides selon Y' de ladite au moins une paire additionnelle sont également sont également parcourus simultanément par des signaux microondes de pulsations $\omega a'$ ou $\omega b'$, à certains instants différents du troisième ensemble d'instants.

Selon un autre aspect l'invention concerne une puce atomique matricielle selon comprenant :

- un premier ensemble de N premiers rubans conducteurs indicés n et un deuxième ensemble de M deuxième rubans conducteurs indicés m perpendiculaires entre eux et formant respectivement des N lignes et des M colonnes d'une matrice, les rubans du premier ensemble étant isolés électriquement des rubans du deuxième ensemble,

  on définit des axes Xk indicés k selon des premières diagonales de la matrice et des axes YI indicés I selon des deuxièmes diagonales perpendiculaires aux première diagonales,
  la puce matricielle comprenant également des premières paires de guides d'onde selon chaque axe Xk et des deuxièmes paires de guides d'onde selon chaque axe YI, chaque pixel de la matrice formant une puce élémentaire.

Selon un mode de réalisation la puce atomique matricielle selon l'invention comprend en outre :

- pour chaque axe Xk, au moins une paire additionnelle de guides selon Xk plus éloignés de l'axe Xk que la première paire,

- pour chaque axe YI, au moins une paire additionnelle de guides selon YI plus éloignés de l'axe YI que la deuxième paire.

L'invention concerne également un capteur à atomes ultrafroids comprenant :

- une puce atomique matricielle selon l'invention,

- une source d'atomes agencée pour générer un nuage d'atomes ultrafroids près dudit plan XY de ladite puce atomique,

- un générateur d'un champ magnétique homogène,

- au moins un processeur, au moins un générateur de tension ou de courant continu adapté à commander des courants électriques dans lesdits rubans et au moins un générateur de tension ou de courant micro-ondes connecté audits guides d'ondes,

- un système de détection d'intensité optique,

le capteur étant adapté pour mesurer, selon les besoins et de manière reconfigurable, au moins une accélération et/ ou une vitesse de rotation selon une direction correspondant à celle des axes Xk et/ou des axes YI, et/ou une vitesse de rotation selon l'axe Z, à partir desdites puces élémentaires.
Selon un dernier aspect l'invention concerne un procédé de mesure d'une vitesse de rotation autour d'au moins un axe dénommé axe de mesure, par un capteur à atomes ultrafroids comprenant une puce atomique, ladite puce atomique étant placée dans une enceinte à vide et comportant un plan de mesure XY repéré par un axe X et un axe Y orthogonaux, ledit plan de mesure étant normal à un axe Z, la puce atomique comprenant :

- une première paire de guides d'ondes constituée d'un premier et un deuxième guide d'ondes coplanaires, parallèles entre eux et disposés symétriquement de part et d'autre d'un axe dont la projection dans le plan XY est selon l'axe X, dénommés guides selon X,

- une deuxième paire de guides d'ondes constituée d'un premier et un deuxième guide d'ondes coplanaires parallèles entre eux et disposés symétriquement de part et d'autre d'un axe dont la projection dans le plan XY est selon un axe Y', dénommés guides selon Y',

les guides selon X étant isolés électriquement des guides selon Y',

les projections des guides selon X et des guides selon Y' dans le plan XY formant à leur intersection un premier parallélogramme de centre O et présentant une première surface,

- un premier ruban conducteur et un deuxième ruban conducteur agencés de sorte que leur projection respective dans le plan XY forment à leur intersection un deuxième parallélogramme également de centre O et présentant une deuxième surface, lesdits rubans étant adaptés à être traversés par des courants continus,
- une intersection entre la première et la deuxième surface étant supérieure ou égale à 40% de la première surface,

le procédé comprenant, pour la mesure de la vitesse de rotation selon Z, les étapes consistant à :

**A** Générer un nuage de dits atomes ultrafroids, incluant des phases d'émission desdits atomes, de refroidissement desdits atomes, d'initialisation desdits atomes dans au moins un état interne |a> et de piégeage d'un nuage de dits atomes ultrafroids dans un minimum local de potentiel, ledit piégeage s'effectuant par passage de courants continus dans le premier et le deuxième ruban,

**B** Initialiser les états internes en superposant de manière cohérente lesdits atomes ultrafroids entre ledit état | a> et un état interne |b> différent de |a> par une première impulsion $\pi / 2$ ;

**C** Séparer spatialement un nuage de dits atomes de dit état interne |a> dans un piège d'un nuage de dits atomes de dit état interne |b> dans un autre piège, et déplacer lesdits pièges en sens opposé suivant une trajectoire fermée contenue dans un plan perpendiculaire à l'axe de mesure et initialisée à partir du point O:

- en appliquant une tension ou un courant à fréquences micro-ondes prédéterminées auxdits guides d'ondes selon une séquence prédéterminée,

- et en appliquant une valeur constante de tension ou de courant continu aux premier et deuxième rubans,

**D** Recombiner lesdits états internes |a> et |b> en appliquant auxdits atomes ultrafroids une deuxième impulsion $\pi / 2$ puis mesurer le nombre d'atomes dans un état interne choisi parmi au moins |a> et |b> ;

**E** Déterminer la phase Sagnac desdits atomes ultrafroids et calculer la vitesse de rotation dudit capteur selon ledit axe de mesure.

Selon un mode de réalisation, dans le procédé de mesure selon l'invention, pour la mesure d'une vitesse de rotation autour de l'axe Z, pendant l'étape C la séquence inclut l'application à certains instants d'un signal microonde formé de la superposition d'un signal microonde à une pulsation $\omega a$ et d'un signal microonde de pulsation $\omega b$, à un des guides selon X de la première paire, ou l'application d'un signal microonde formé de la superposition d'un signal microonde à une pulsation wa' et d'un signal microonde de pulsation wb', à un des guides selon Y' de la deuxième paire.

Selon un mode de réalisation du procédé de mesure selon l'invention, pour la mesure d'une vitesse de rotation autour de l'axe X ou de l'axe Y', pendant l'étape **C** la séquence inclut :

- pour la mesure de la vitesse de rotation autour de l'axe X, l'application à certains instants d'un signal microonde formé de la superposition d'un signal microonde à une pulsation $\omega a$ et d'un signal microonde de pulsation $\omega b$, simultanément aux deux guides selon X de la première paire,

- pour la mesure de la vitesse de rotation autour de l'axe Y', l'application à certains instants d'un signal microonde formé de la superposition d'un signal microonde à une pulsation $\omega a'$ et d'un signal microonde de pulsation $\omega b'$, simultanément aux deux guides selon Y' de la deuxième paire.

La description suivante présente plusieurs exemples de réalisation du dispositif de l'invention: ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

La figure 1 déjà citée illustre un exemple de topologie des fils conducteurs et des guides microondes et de trajectoire des deux nuages d'atomes.

La figure 2 déjà citée illustre la géométrie des guides et fils de la puce atomique ainsi que les pièges T1 et T2.

La figure 3 déjà citée illustre le principe de génération de la trajectoire des nuages d'atomes sur la puce atomique.

La figure 4 illustre une puce atomique selon l'invention.

La figure 5 illustre un exemple de trajectoire fermée TX parcourue par les nuages atomiques pour une mesure d'une vitesse de rotation selon l'axe X, la trajectoire se situant dans un plan perpendiculaire à l'axe X.

La figure 6 décrit la séquence de déplacement des nuages atomiques pour l'obtention de la trajectoire TX.

La figure 7 illustre le chronogramme décrivant les intensités appliquées aux rubans conducteurs et les puissances et fréquences appliquées aux guides d'ondes en fonction du temps pour obtenir la séquence de déplacement de la figure 6.

La figure 8 décrit un mode de réalisation de la puce atomique selon l'invention dans lequel les rubans W1 et W2 sont à l'aplomb des points de croisement des guides d'ondes.

La figure 9 décrit un mode de réalisation préféré dans lequel les rubans sont perpendiculaires entre eux, les paires de guide d'onde sont perpendiculaires entre elles et sont orientées à 45° des rubans.

La figure 10 illustre un premier exemple de première trajectoire TZ par déplacement des deux nuages piégés.

La figure 11 illustre le chronogramme associé aux déplacements des nuages de la figure 10.

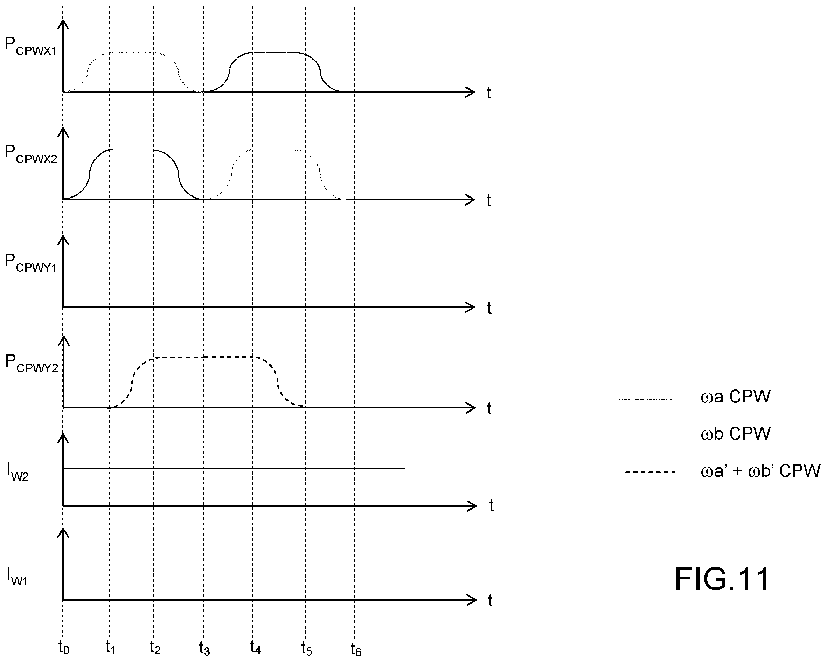

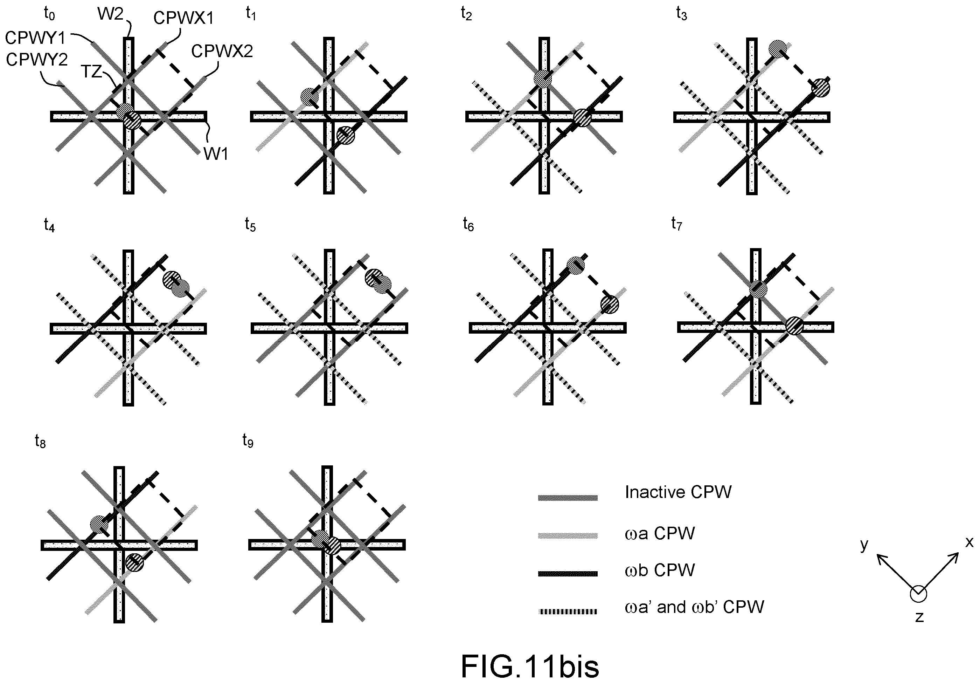

La figure 11bis illustre un exemple de trajectoire TZ selon une option du premier exemple.

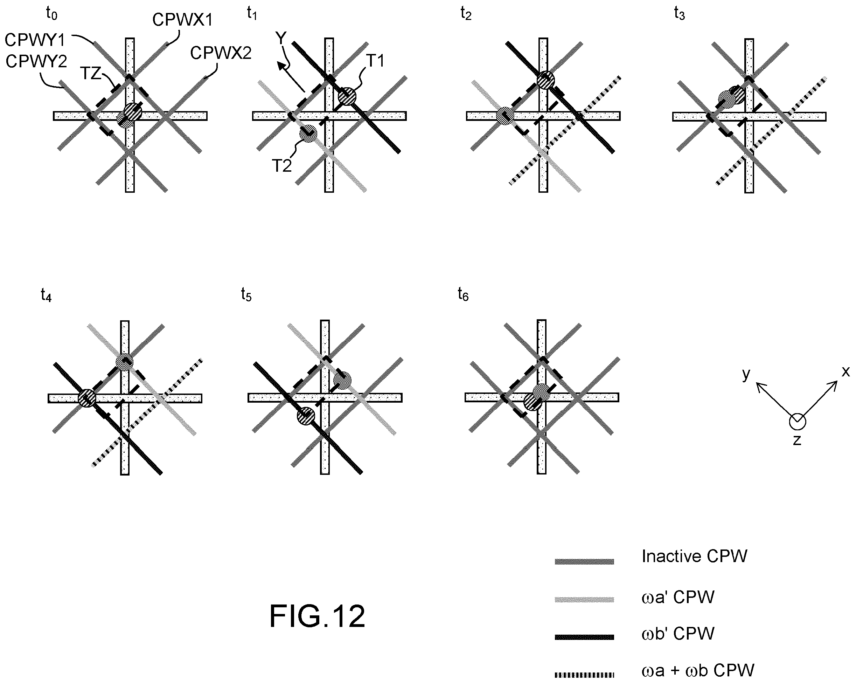

La figure 12 illustre un deuxième exemple de première trajectoire TZ par déplacement des deux nuages piégés.

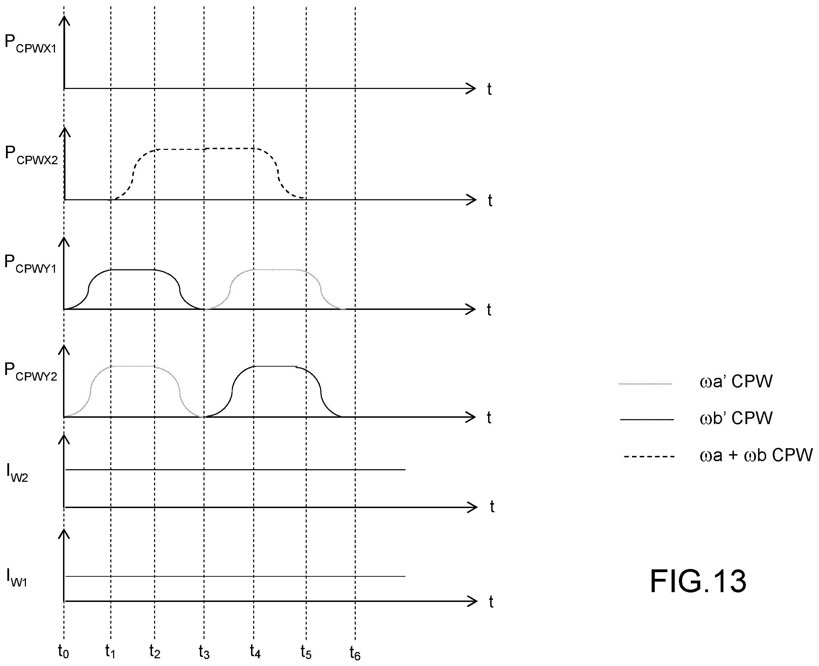

La figure 13 illustre le chronogramme associé aux déplacements des nuages de la figure 12.

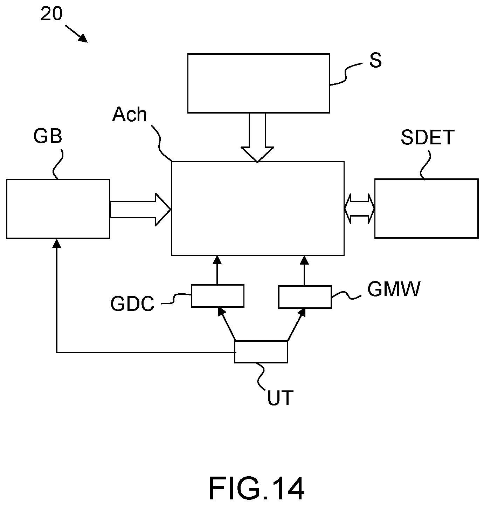

La figure 14 illustre un capteur à atomes ultrafroids selon l'invention permettant une mesure de vitesse de rotation selon au moins l'axe Z.

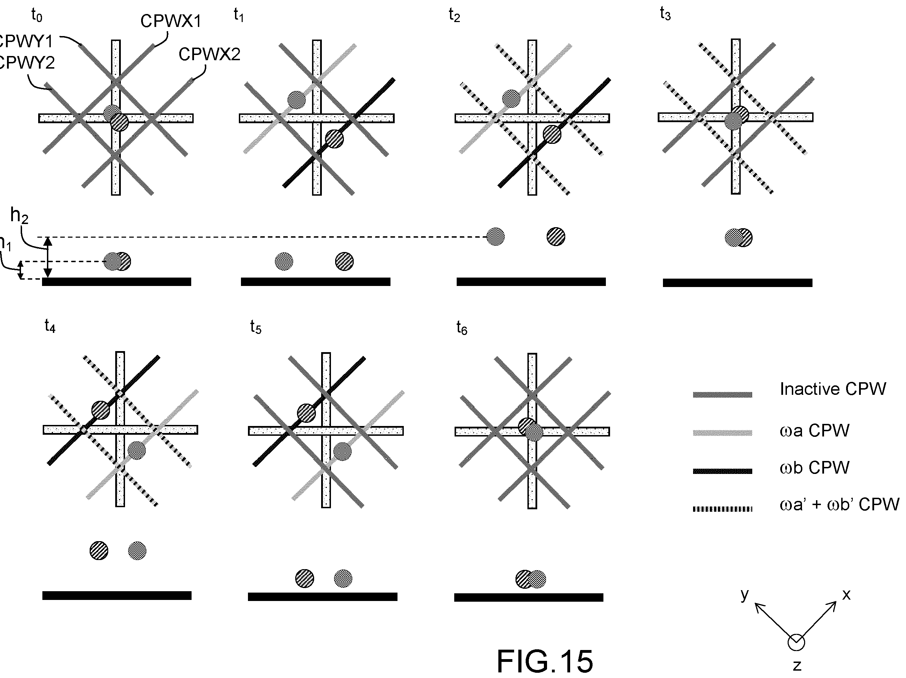

La figure 15 illustre un exemple de réalisation d'une trajectoire TX avec une puce selon l'invention.

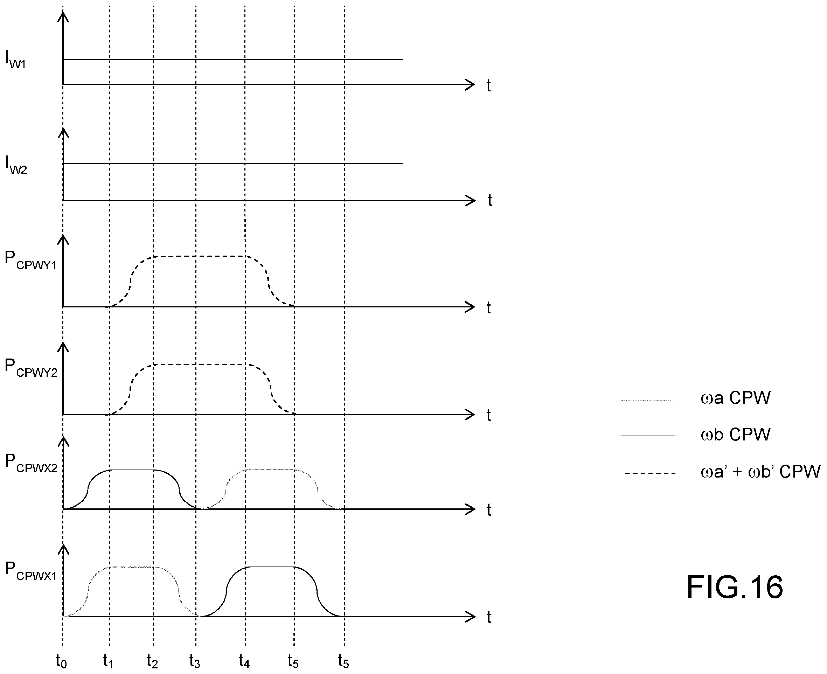

La figure 16 illustre le chronogramme associé aux déplacements des nuages de la figure 15.

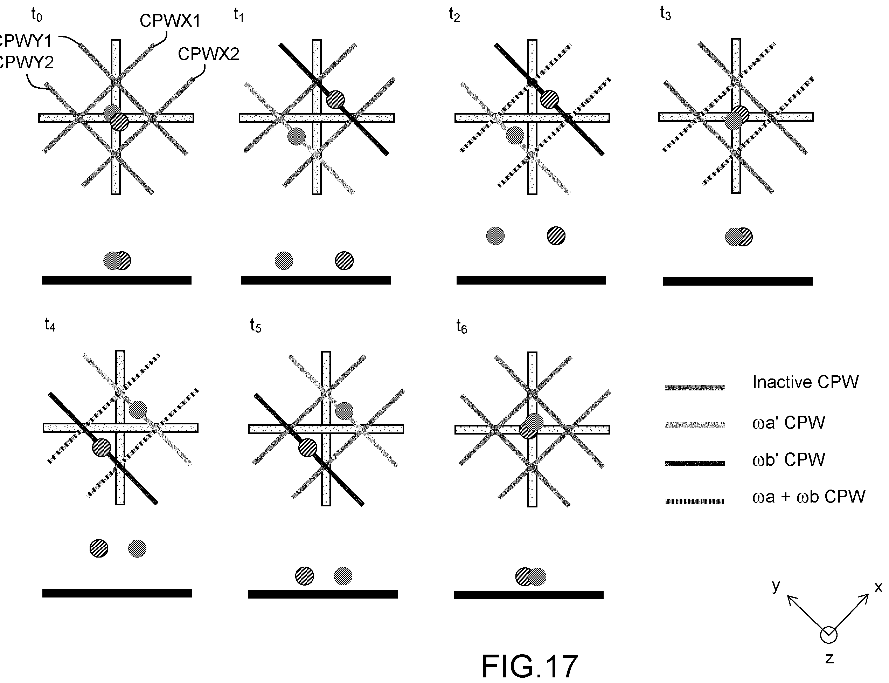

La figure 17 illustre un exemple de réalisation d'une trajectoire TY avec une puce selon l'invention.

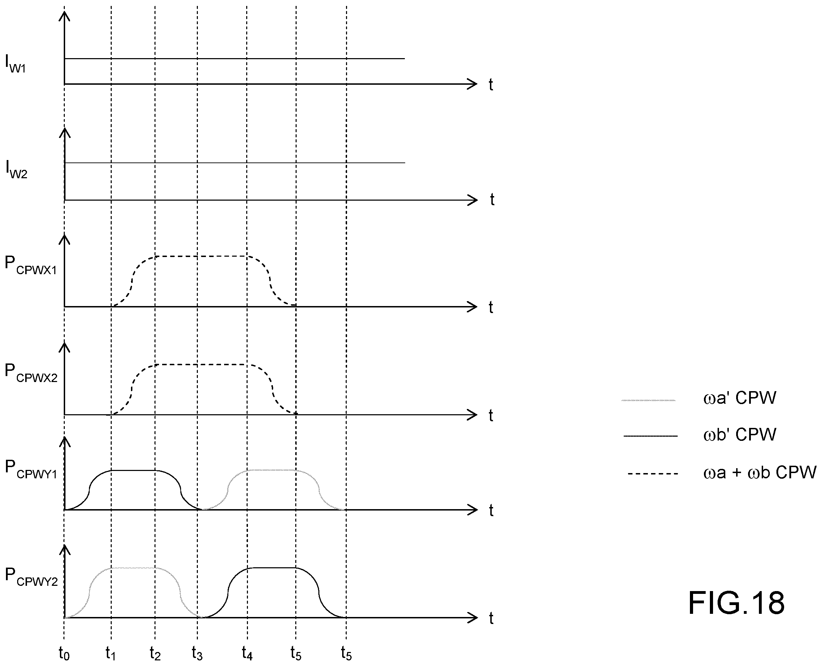

La figure 18 illustre le chronogramme associé aux déplacements des nuages de la figure 17.

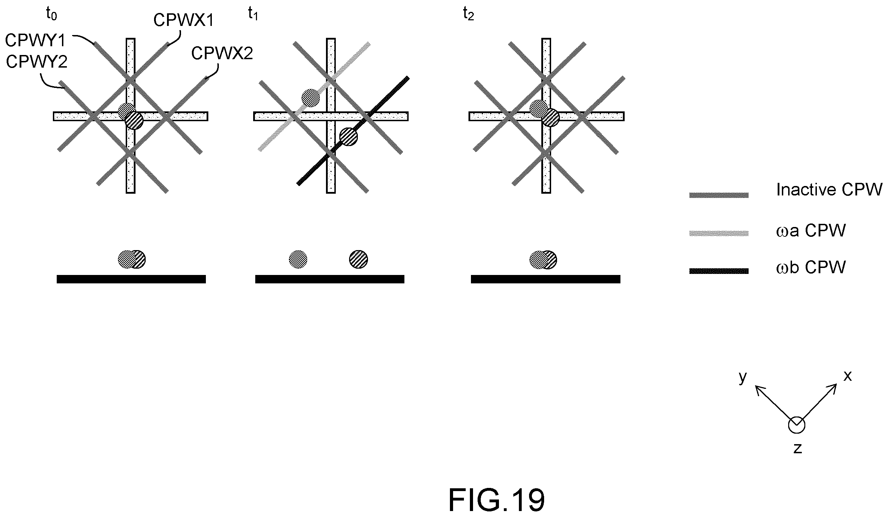

La figure 19 illustre un exemple des déplacements des nuages pour la mesure de l'accélération selon X $a_X$.

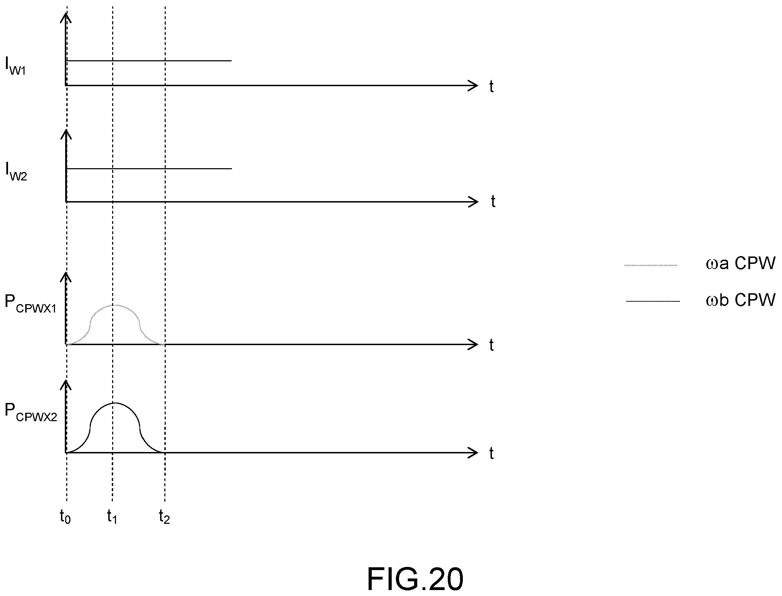

La figure 20 illustre le chronogramme associé aux déplacements des nuages de la figure 19.

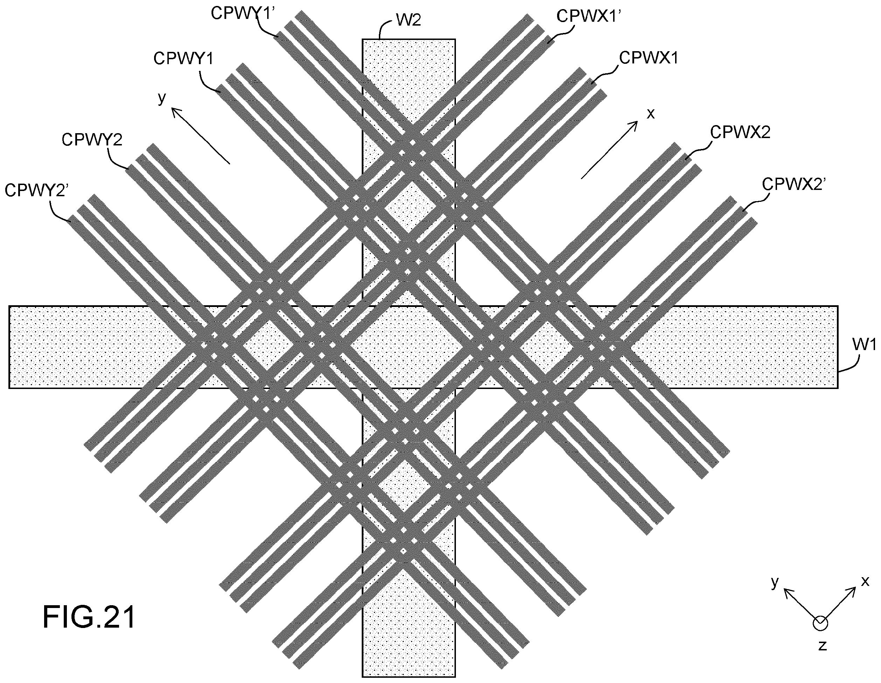

La figure 21 illustre une première variante de puce selon l'invention.

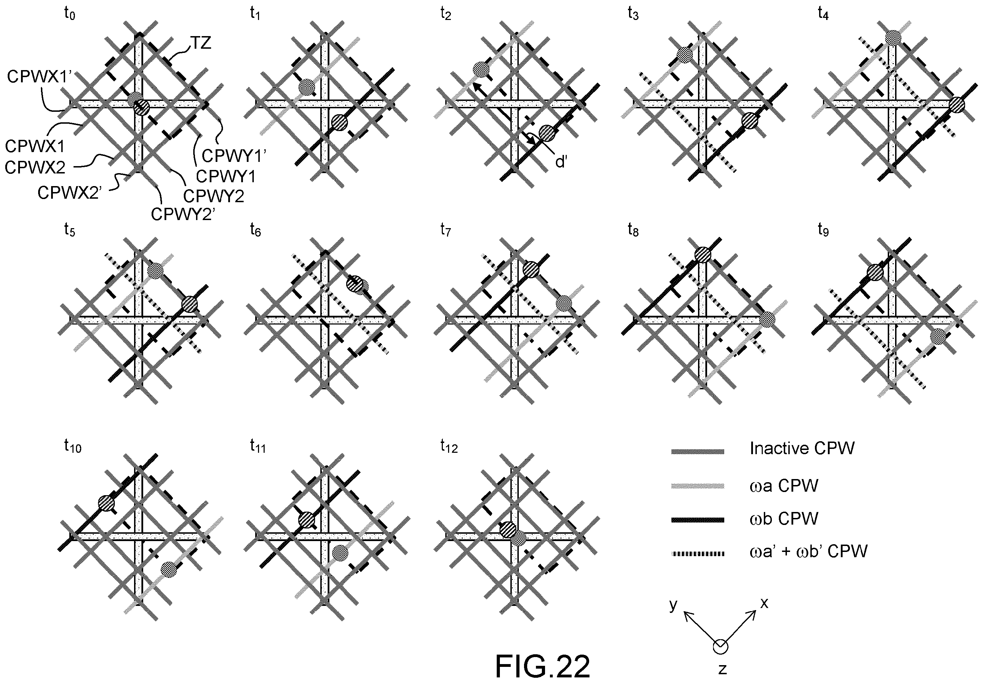

La figure 22 illustre un premier exemple des déplacements des nuages pour la réalisation d'une trajectoire TZ avec une puce selon la première variante.

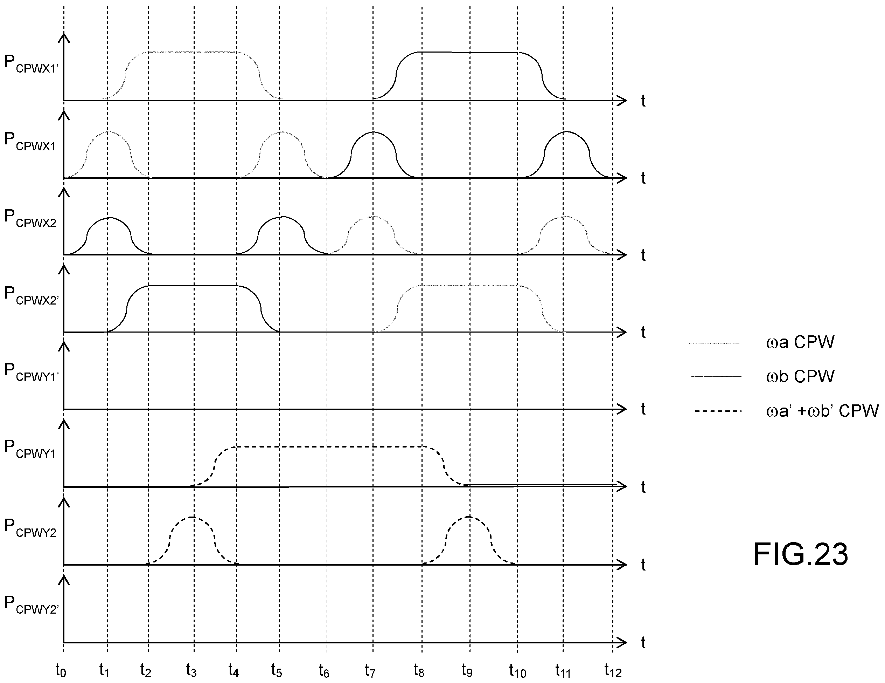

La figure 23 illustre le chronogramme associé aux déplacements des nuages de la figure 22.

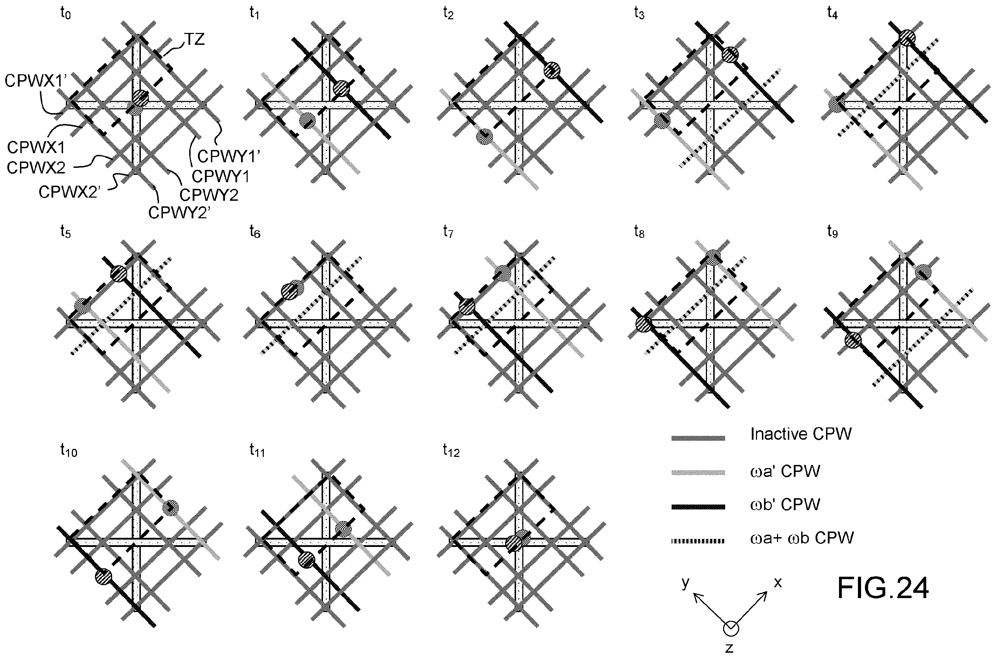

La figure 24 illustre un deuxième exemple des déplacements des nuages pour la réalisation d'une trajectoire TZ avec une puce selon la première variante.

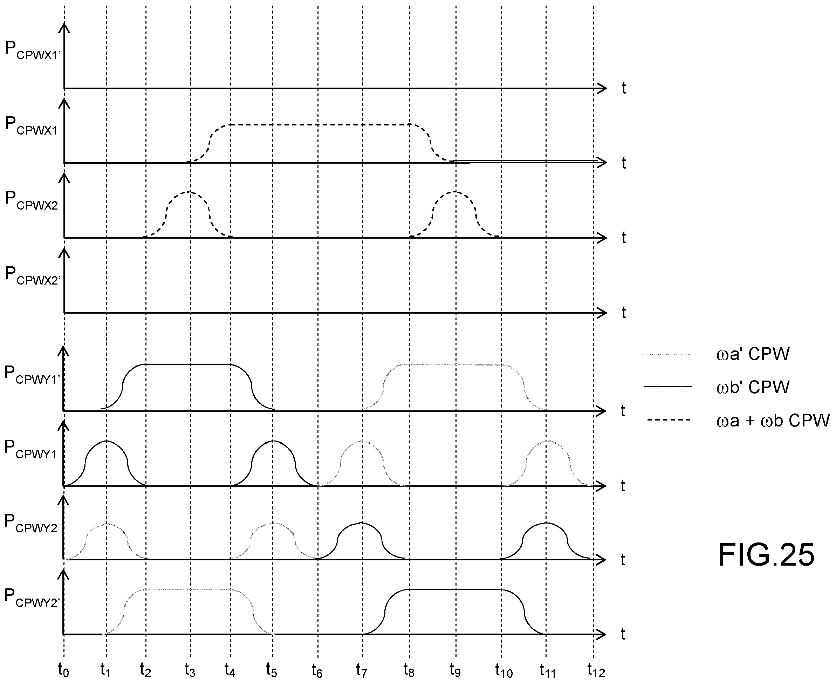

La figure 25 illustre le chronogramme associé aux déplacements des nuages de la figure 24.

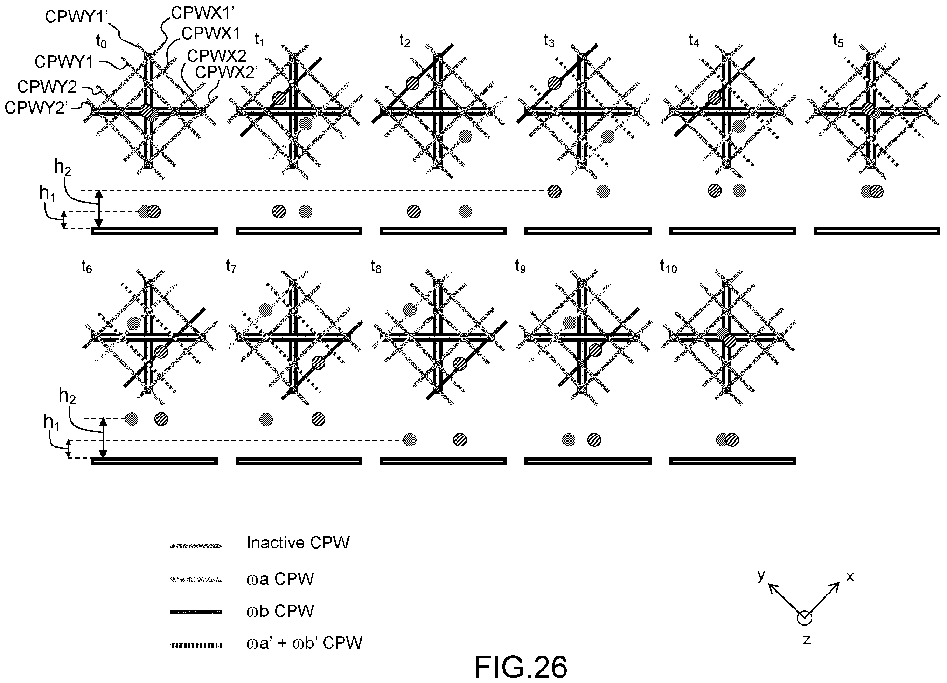

La figure 26 illustre un exemple des déplacements des nuages pour la réalisation d'une trajectoire TX avec une puce selon la première variante.

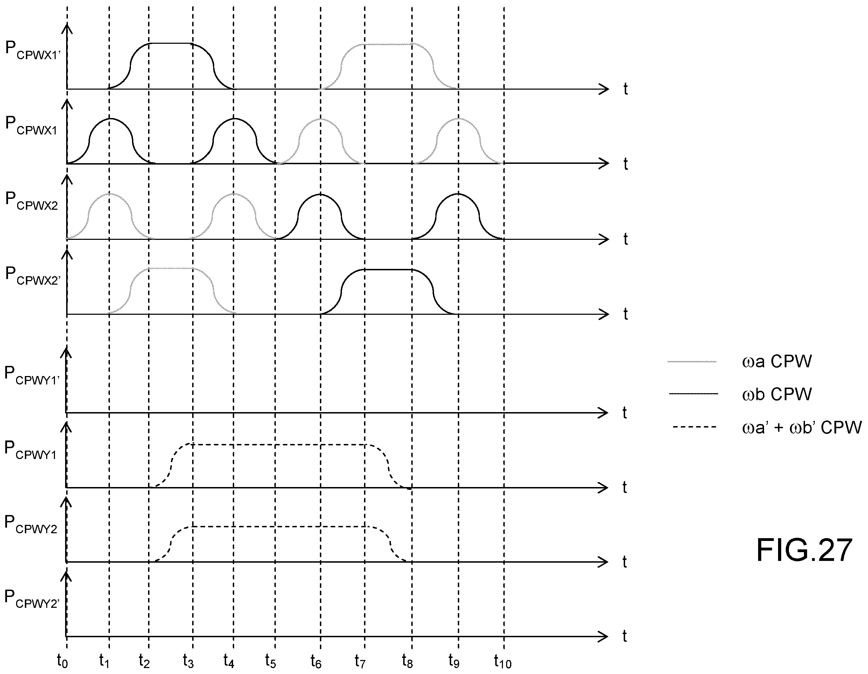

La figure 27 illustre le chronogramme associé aux déplacements des nuages de la figure 26.

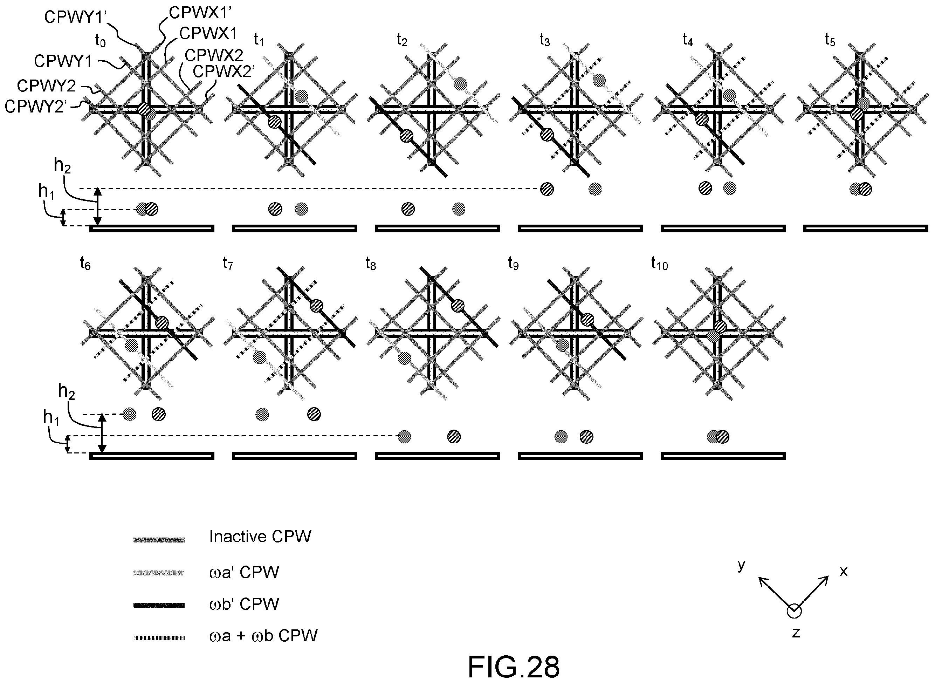

La figure 28 illustre un exemple des déplacements des nuages pour la réalisation d'une trajectoire TY avec une puce selon la première variante.

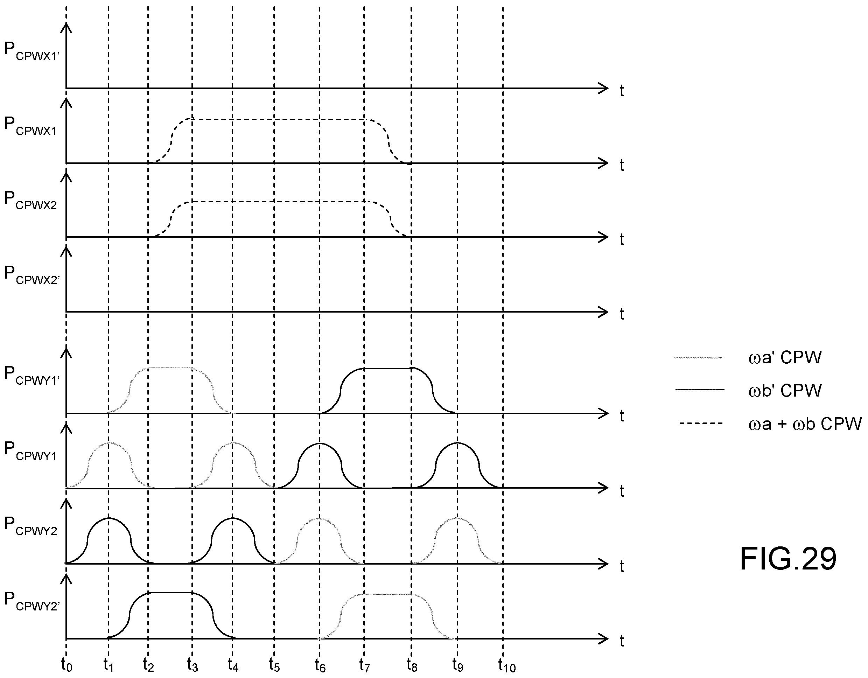

La figure 29 illustre le chronogramme associé aux déplacements des nuages de la figure 28.

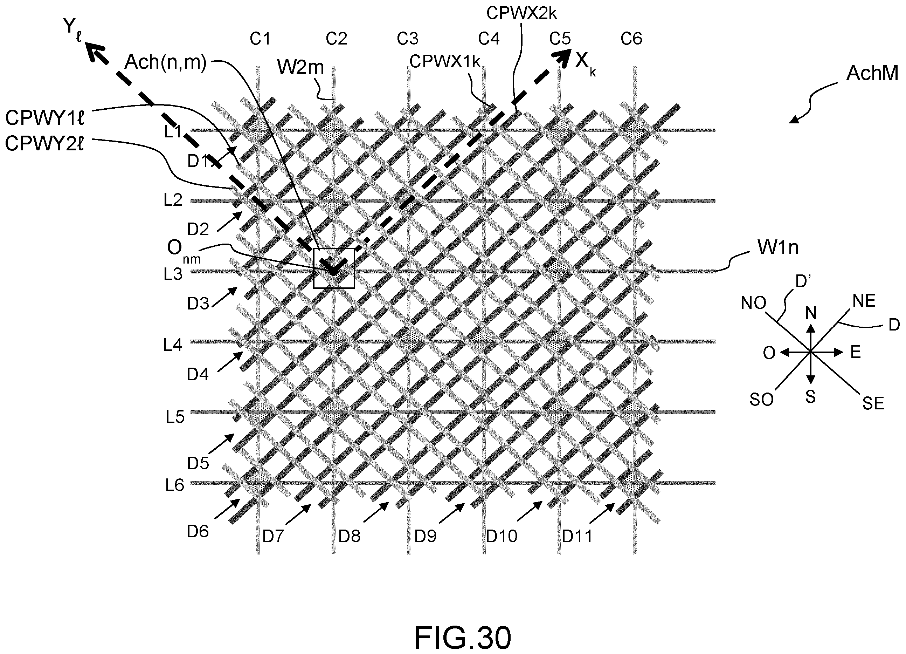

La figure 30 illustre une puce atomique matricielle selon l'invention.

## DESCRIPTION DETAILLEE DE L'INVENTION

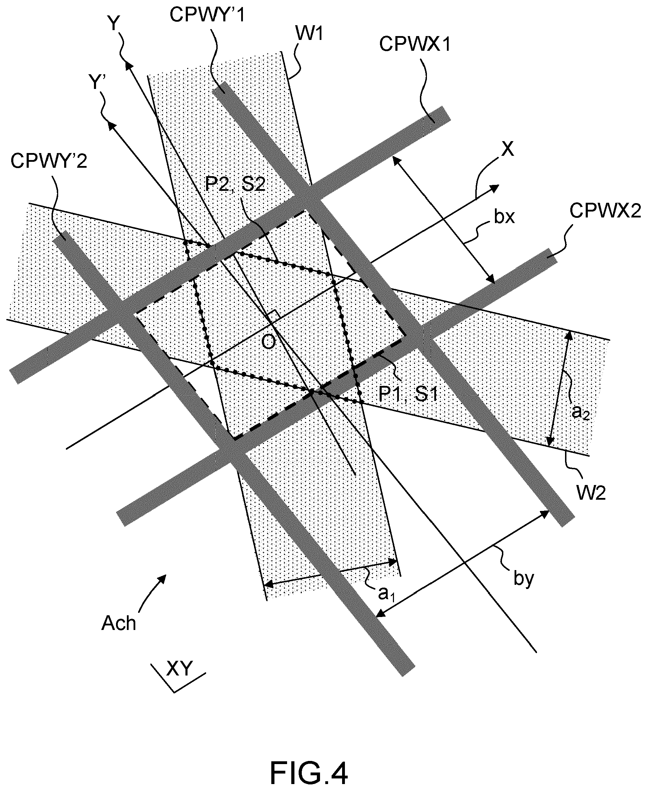

Selon un premier aspect l'invention concerne une puce atomique Ach pour capteur à atomes ultrafroids telle qu'illustrée figure 4. La surface de la puce défini un plan XY dénommé plan de mesure repéré par un axe X et un axe Y perpendiculaires entre eux, le plan XY étant normal à un axe Z. Les axes XYZ définissent un repère orthonormé.

La puce atomique Ach comprend une première paire de guides d'ondes constituée d'un premier guide d'onde CPWX1 et d'un deuxième guide d'onde CPWX2 coplanaires, parallèles entre eux et disposés symétriquement de part et d'autre d'un axe dont la projection dans le plan XY est selon l'axe X. Les guides d'onde parallèles à X sont dénommés guides selon X.

La puce atomiqe Ach comprend également une deuxième paire de guides d'ondes constituée d'un premier guide d'onde CPWY'1 et d'un deuxième guide d'onde CPWY'2 coplanaires, parallèles entre eux et disposés symétriquement de part et d'autre d'un axe dont la projection dans le plan XY est selon un axe Y' différent de l'axe X. Les guides d'onde parallèles à Y' sont dénommés guides selon Y'.

Les guides selon X sont isolés électriquement des guides selon Y'. Préférentiellement ils sont disposés sur un niveau différent de la puce. Dans l'hypothèse non limitative selon laquelle les guides selon X occupent le niveau correspondant à la surface XY, la projection de l'axe X dans le plan XY correspond à cet axe X, alors que l'axe de symétrie des deux guides d'onde CPWY'1 et CPWY'2 se trouve dans le plan d'un autre niveau. Ainsi c'est bien la projection de cet axe de symétrie dans le plan XY, dénommé Y', qui est situé dans le plan XY. L'axe Y' est différent de X, l'angle entre X et Y' est supérieur ou égal à 30° et inférieur ou égale à 150°. Les projections des guides selon X et des guides selon Y' dans le plan XY forment un premier parallélogramme P1 de centre O, de surface intérieure dénommée première surface S1. On dénomme surface intérieure la surface délimitée par les bords intérieurs des guides d'onde.

La puce comprend également un premier ruban W1 conducteur et un deuxième ruban W2 conducteur, agencés de sorte que leur projection respective dans le plan XY forment à leur intersection un deuxième parallélogramme P2 également de centre O et présentant une surface d'intersection dénommé deuxième surface S2. Le fait pour les deux parallélogrammes de partager un même centre O est dicté par des considérations de symétrie pour la génération des minimas de potentiel pour les pièges à atomes. L'angle entre les deux rubans est supérieur ou égal à 20°. Les rubans sont adaptés pour être traversés par des courants continus. Les deux rubans W1 et W2 peuvent être en contact électrique l'un avec l'autre et déposés sur un même niveau de la puce, ou isolés électriquement l'un de l'autre. Dans ce cas les deux fils W1 et W2 soit occupent le même niveau et sont séparés par une couche isolante au moins à leur intersection, soit occupent deux niveaux différents, comme les guides d'onde. Les différents niveaux forment un empilement disposé sur un substrat. La puce atomique selon l'invention comprend ainsi un substrat et l'empilement. Selon un premier exemple les différents guides et rubans (éléments) sont successivement déposés sur le substrat et séparés par des couches isolantes le cas échéant. Selon un deuxième exemple le substrat est gravé, un des éléments est inséré, puis un matériau identique à celui du substrat est déposé puis gravé et ainsi de suite. Dans ce dernier cas les différents éléments sont donc intégrés dans un même matériau.

Pour plus de clarté dans les prochaines figures les guides et les rubans sont représentés dans le plan XY.

Les guides d'onde et les fils conducteurs sont de nature similaire à ceux décrits dans le document WO2017089489. Typiquement les rubans et les guides sont en or ou en cuivre, isolés par une couche d'un matériau choisi parmi AIN, $SiO_2$, $Si_3N_4$, les couches étant déposées sur un substrat Sub en AIN, ou en silicium, ou en $SiO_2$, ou en SiC.

Pour faire fonctionner la puce pour une mesure d'une vitesse de rotation $\Omega z$ selon l'axe Z avec seulement ces deux rubans, les inventeurs ont démontrés qu'il fallait que l'intersection entre la première et la deuxième surface soit supérieure ou égale à 40%, préférentiellement 60%, de la première surface S1 :

$$S1 \cap S2 \geq 40\% \text{ de } S1 \qquad (1)$$

Le cas d'une surface S2 du deuxième parallélogramme P2 recouvrant complétement la surface S1 de P1 et dépassant permet également un bon fonctionnement de la puce.

Soit a1 la largeur de W1 et a2 la largeur de W2, bx la distance entre les deux guides selon X et by' la distance entre les deux guides selon Y', préférentiellement et en complément à la condition sur les surfaces on a :

$$a_{min} = min(a1, a2) \; ; \; a_{max} = max(a1, a2)$$

$$a_{min} \leq bx \leq 4.a_{max}/3 \quad \text{et} \quad a_{min} \leq by \leq 4.a_{max}/3$$

Typiquement a1 et a2 sont comprises entre 20 et 200 $\mu$m.

La puce atomique Ach selon l'invention diffère de la puce décrite dans le document WO2017089489 d'une part par la présence de 4 guides d'onde (au lieu de deux), par le nombre de fils (seulement 2) et par l'agencement spécifique de ces deux fils conducteurs par rapport aux 4 guides d'onde.

La puce atomique selon l'invention reprend la géométrie de la puce atomique décrite dans le document FR2004743 non encore publié à ce jour, à la différence que les fils conducteurs de FR2004743 fins ont été remplacés par des rubans présentant une certaine largeur de manière à ce que la surface d'intersection des deux rubans S2 recouvre de manière substantielle voir recouvre complètement ou dépasse la surface inter-guides S1 (voir condition (1)).

On dénomme rubans W1 et W2 du fait que leur épaisseur respectives e1 et e2 sont d'au moins un ordre de grandeur (facteur 10) inférieures à leur largeur respectives a1 et a2.

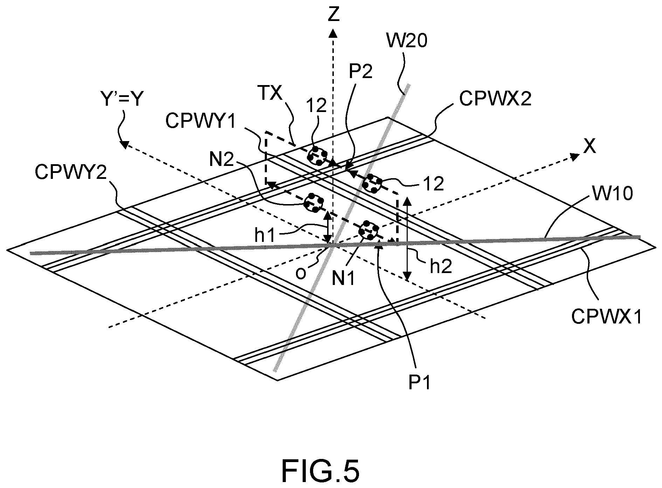

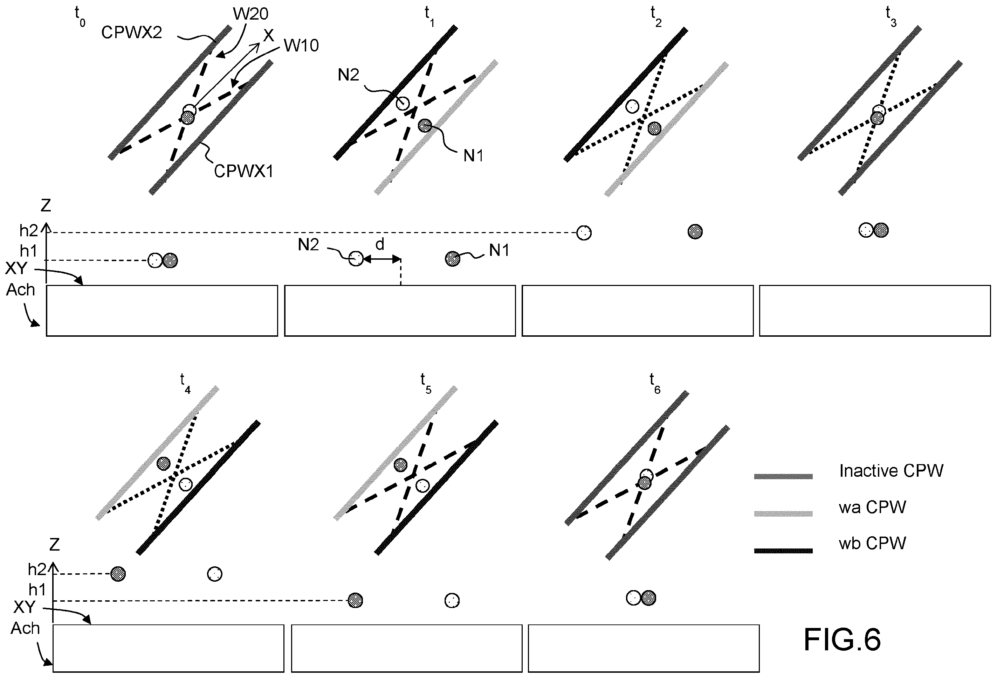

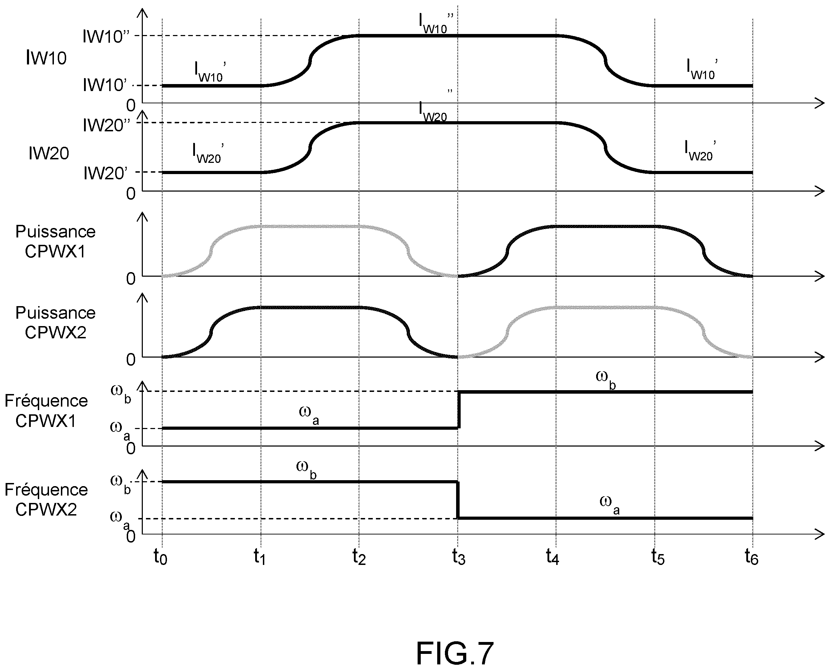

Dans le document FR2004743 la géométrie à deux fils conducteurs, lorsque la puce est intégrée à un capteur inertiel, permet de réaliser deux trajectoires fermées TX et TY' destinées à être parcourues par les deux nuages N1 et N2 d'atomes froids 12, ces trajectoires étant comprises non pas dans un plan parallèle au plan XY comme dans le document WO2017089489 , mais dans deux plans perpendiculaires à XY ou verticaux : le plan YZ perpendiculaire à X pour TX, tel qu'illustré figure 5, et le plan XZ perpendiculaire à Y' pour TY'. La figure 6 décrit la séquence de déplacement des nuages atomiques pour l'obtention de la trajectoire TX. Une teinte gris clair du guide correspond à l'application d'une pulsation $\omega a$ à ce guide, une teinte gris foncé à l'application d'une pulsation $\omega b$, la teinte gris intermédiaire correspondant à un guide inactif auquel aucun signal n'est appliqué. Les traits en pointillé long signifient que l'on applique aux fils W10 et W20 des niveaux bas d'intensité continue, respectivement Iw10' et Iw20', tandis que des traits pointillés-points signifient que l'on applique à W10 et W20 des niveaux haut d'intensité continue, respectivement Iw10" et Iw20". La séparation des deux nuages s'effectue par application de $\omega a$ à CPWX1 et $\omega b$ à CPWX2, tandis que le changement de hauteur, de h1 à h2, s'effectue par passage, dans les fils conducteurs, du niveau bas au niveau haut d'intensité. Ceci est illustré sur le chronogramme de la figure 7, qui décrit les intensités IW10 et IW20 appliquées respectivement à W10 et W20, les puissances et les fréquences appliquées à CPWX1 et CPWX2, en fonction du temps. Ainsi dans le document FR2004743 le passage de h1 à h2 pour la réalisation des trajectoires « verticales » TX et TY' est réalisé par application aux deux fils de signaux continus à deux paliers. Dans ce document la mesure selon Z avec la trajectoire « horizontale » (dans le plan XY) est réalisée avec une pluralité de fils conducteurs, en déplaçant les nuages par déplacement du minimum de champ magnétique, obtenu par allumage successifs de différents points de croisement entre les fils, comme illustré figures 14 et 15 de ce document.

Avec la puce Ach selon l'invention à deux rubans conducteurs, les inventeurs ont mis au point une méthode d'adressage permettant aux nuages d'atomes 12 de décrire en sens inverse une trajectoire horizontale (parallèle au plan XY), dénommée première trajectoire TZ, sans nécessiter de fils/rubans additionnels. Avec la puce selon l'invention une trajectoire horizontale est obtenue avec seulement deux rubans, et par application de signaux microondes spécifiques selon une séquence temporelle d'interférométrie particulière, les rubans conducteurs étant eux maintenus à une intensité constante. La condition pour la réalisation de la trajectoire TZ est :

i) d'une part que l'intersection entre la première et la deuxième surface soit supérieure ou égale à 40% de la première surface S1,

ii) d'autre part la mise en œuvre d'une séquence d'interférométrie particulière incluant l'application à un des guide d'ondes d'un signal microonde comprenant la superposition d'un signal à une première pulsation ($\omega a$ ou wa') et d'un signal à une deuxième pulsation ($\omega b$ ou $\omega b'$). Ce signal, proportionnel à Ea.cos($\omega at$)+Eb.cos($\omega bt$) (respectivement à Ea'.cos(wa't)+Eb'.cos(wb't)) est dénommé signal somme, et noté signal [a+b] ou signal [a'+b'] en fonction des pulsations qui le compose.

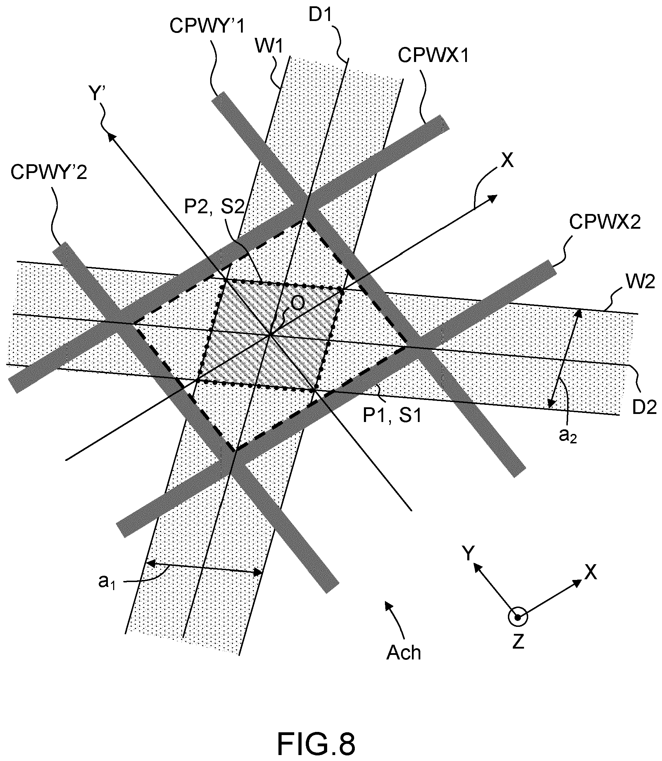

Pour des questions de symétrie du potentiel appliqué pour l'obtention des pièges atomiques, préférentiellement les rubans W1 et W2 sont à l'aplomb des points de croisement des guides d'onde, ce qui se traduit par le fait le premier ruban W1 et le deuxième ruban W2 sont respectivement orientés selon une première diagonale D1 et une deuxième diagonale D2 du premier parallélogramme P1, tel qu'illustré figure 8.

Préférentiellement W1 et W2 sont perpendiculaires entre eux.

Préférentiellement la deuxième paire de guides d'onde est perpendiculaire à la première paire de guides d'onde, l'axe Y' étant alors confondu avec l'axe Y.

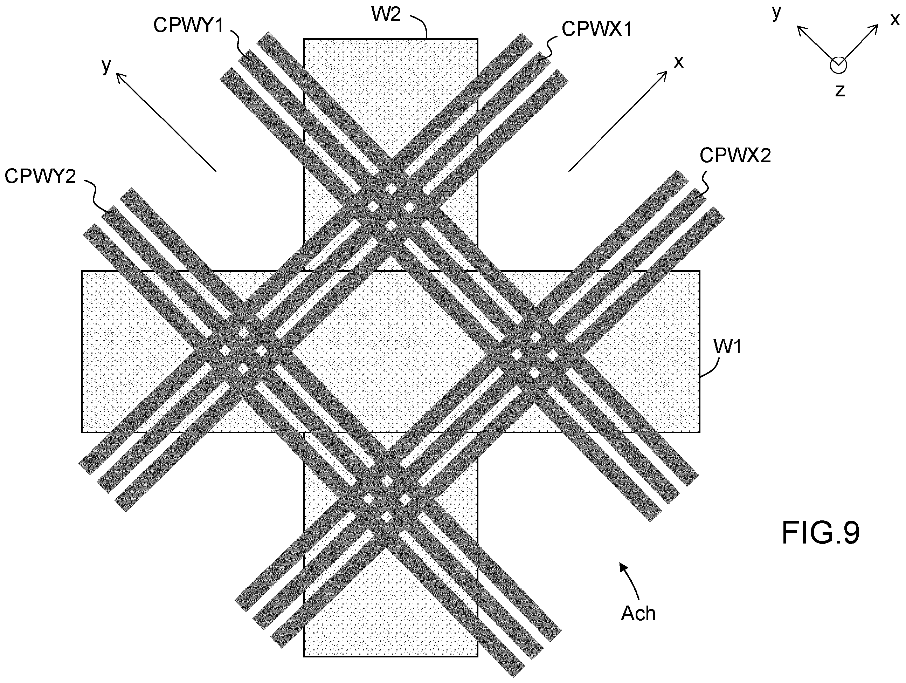

Selon un mode préféré les rubans sont perpendiculaires entre eux, les paires de guide d'onde sont perpendiculaires entre elles et sont orientées à 45° des rubans, tel qu'illustré figure 9 avec des guides d'onde à trois fils conducteurs. Dans la suite diverse exemples non limitatifs de mise en œuvre de la puce atomique Ach selon l'invention dans un capteur à atomes ultrafroids sont donnés avec ce mode préféré, mais il est entendu que ces exemples sont applicables à tout type de puce atomique selon l'invention.

Pour plus de clarté de certains dessins, les rubans conducteurs selon l'invention sont illustrés fins et non larges comme revendiqués. La convention des teintes de gris et des traits est : une teinte gris clair du guide correspond à l'application d'une pulsation $\omega a$ ou $\omega a'$ à ce guide, une teinte gris foncé à l'application d'une pulsation $\omega b$ ou $\omega b'$, une teinte de gris intermédiaire à un guide inactif auquel aucun signal n'est appliqué, un trait en pointillé à l'application d'un signal somme [a+b] ou [a'+b'].

Les inventeurs ont établis que, avec une puce Ach selon l'invention, une fois les nuages séparés par l'application de pulsations différentes sur chacun des guides d'une paire, on pouvait, par application d'un signal somme à un des guides d'onde de l'autre paire, repousser les deux nuages du côté opposé à celui du guide « allumé » avec le signal somme. Pendant que les nuages décrivent la première trajectoire TZ un courant d'intensité constante est appliqué aux rubans.

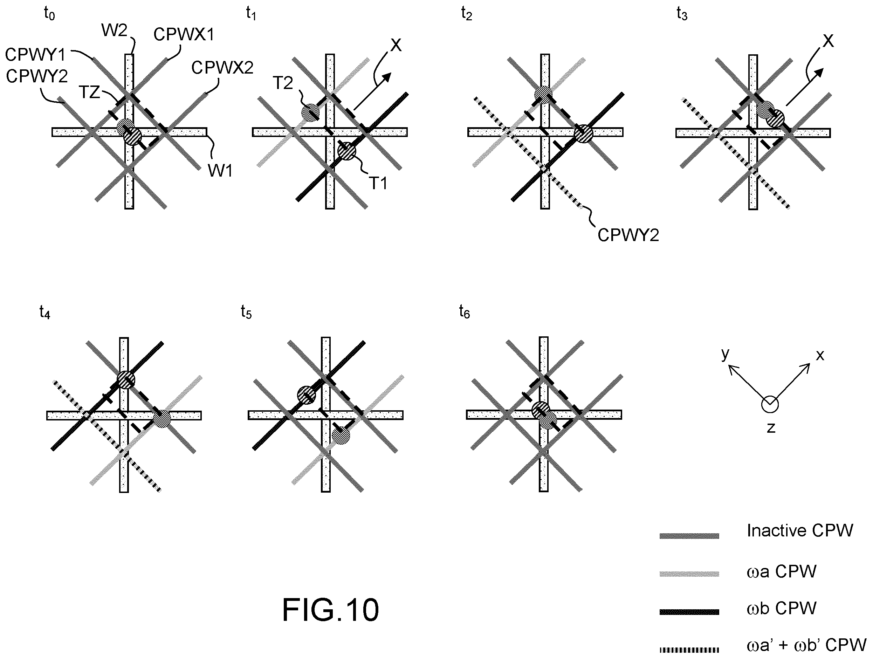

Un premier exemple de première trajectoire TZ par déplacement des deux nuages piégés est illustré figure 10, le déplacement étant illustré à différents instants t1 à t6 de la séquence temporelle d'adressage. Les signaux appliqués aux guides et rubans en fonction du temps sont illustrés figure 11. Les unités sur les axes sont arbitraires. $P_{CPWX1}$ est la puissance du signal microonde appliqué à CPWX1 et $I_{W1}$ est l'intensité appliquée au ruban W1.

Juste avant t0 on initialise les états internes en superposant de manière cohérente les atomes ultrafroids entre les états |a> et |b> par une première impulsion $\pi/2$. Les courants $I_{W1}$ et $I_{W2}$ sont imposés respectivement aux fils conducteurs W1 et W2. Les deux états internes |a> et |b> sont superposés de manière cohérente et spatialement à l'aplomb du point O dans un piège T (équivalent de l'étape B0 et de l'instant t0 de la figure 3, ou du t0 de la figure 6).

Commence alors la phase de libre évolution.

Entre t0 et t1, la puissance micro-ondes injectée dans les guides d'onde CPWX1 et CPW2 passe progressivement de 0 à sa valeur maximale. Une pulsation $\omega_a$ est envoyée dans le guide d'onde CPWX1 et une pulsation $\omega_b$ est envoyée dans le guide d'onde CPWX2, ce qui permet de séparer les deux nuages d'états internes différents de part et d'autre de l'axe de symétrie X, d'une distance d, jusqu'aux positions schématisées dans t1. Le piège T à atomes ultrafroids décrit précédemment à l'instant t0 est alors transformé en deux pièges T1 et T2 à atomes ultrafroids, chaque piège permettant d'immobiliser un nuage d'atomes ultrafroids d'états internes différents de l'autre piège (en l'occurrence d'états internes |a> dans l'un des pièges, par exemple T1, et d'états internes |b> dans l'autre piège T2). Rappelons qu'une fréquence $\omega a$ (ou $\omega a'$) appliqué à un guide d'onde « pousse » les atomes piégés dans l'état |a> (T1) du côté opposé à ce guide d'onde, et qu'une fréquence $\omega b$ (ou $\omega b'$) appliqué à un guide d'onde « pousse » les atomes piégés dans l'état |b> (T2) du côté opposé à ce guide d'onde. Chaque nuage est illustré par une texture différente, T1 en rayures et T2 en points. Ceci est l'équivalent du temps t1 de la figure 3 et de la figure 6.

Entre t1 et t2 la puissance microonde du guide CPWY2 passe progressivement de 0 à sa valeur maximale par application d'un signal microonde somme formé de la superposition d'un signal microonde à une pulsation wa' et d'un signal microonde de pulsation wb'. Les pulsations wa' et $\omega b'$ sont a priori différentes de $\omega a$ et $\omega b$, mais selon un cas particulier peuvent être égales (wa'=wa, wb'=wb). De manière générale les couples (wa, $\omega b$) et (wa', wb') sont choisi en fonction du matériau utilisé pour les atomes. Pour le cas du Rubidium 87 ils sont reliés aux transitions Zeeman (voir publication Ammar et al précitée). Le prime sert uniquement à différencier ce qui est appliqué aux guides selon X et aux guides selon Y, mais les deux couples sont interchangeables.

L'effet de cette puissance microonde « somme » est de repousser les deux nuages du côté opposé à celui où se trouve le guide CPWY2, les deux nuages étant toujours maintenus séparés d'une distance d selon X par l'application des signaux à CPWX1 et CPWX2. La composante à $\omega$a dans le guide CPWY2 permet de pousser l'état la> du côté opposé à CPWY2, soit vers CPWY1 et la composante à $\omega$b dans le guide CPWY2 permet de pousser l'état |b> du côté opposé à CPWY2, soit vers CPWY1. En appliquant un signal superposant les deux fréquences, par exemple à CPWY2, on repousse les deux nuages dans la même direction avec le même guide. On dénomme « force de poussée » la force permettant, par allumage de guides microonde, de pousser les nuages d'atomes.

Les fils W1 et W2 créent un piège dit piège magnétique DC, ce piège exerce une force de rappel sur les atomes. Cette force de rappel s'oppose à la force de poussée. A courant fixe dans W1 et W2, pour des pièges situés à des distances (selon Z) proches du fils, typiquement à moins de 5 fois la largeur du fils, cette force rappel diminue quand on augmente la largeur du fil. Donc pour tirer le meilleur parti possible de cette force qui pousse les nuages, il faut diminuer la force de rappel du piège magnétique DC, et donc augmenter la largeur des fils.

Ceci est d'autant plus vrai que dans l'invention seuls les champs microonde sont utilisés pour « pousser » les atomes. Les inventeurs ont montré que la force de rappel est suffisamment diminuée, pour la génération des trajectoires fermées des nuages, lorsque la surface d'intersection des rubans S2 recouvre une partie suffisante de l'espace inter-guides S1, traduit par la condition (1).

De t2 à t3 on diminue progressivement les signaux appliqués à CPWX1 et CPWX2, les nuages se rapprochent de X.

De t3 à t4 on augmente à nouveaux progressivement les puissances appliquées à CPWX1 et CPWX2 en inversant les fréquences $\omega$a et $\omega$b, les deux nuages une fois croisés s'éloignent de X de l'autre côté que leur côté d'arrivée.

De t4 à t5 on coupe progressivement le signal somme appliqué à CPWY2, les deux nuages se rapprochent de ce guide en restant séparés selon X.

De t5 à t6 on coupe progressivement les signaux appliqués à CPWX1 et CPWX2, les nuages se rapprochent du point O et à t6 ils se retrouvent à l'aplomb de celui-ci (fin de la phase de libre évolution).

Pendant la séquence temporelle de t0 à t6 les deux nuages atomiques ont décrit la trajectoire TZ en sens inverse, ce qui permet la mesure d'une vitesse de rotation $\Omega$z tel qu'expliqué précédemment.

Pendant toute la séquence temporelle du déplacement des nuages selon la première trajectoire TZ (et de leur recombinaison), l'intensité appliquée aux deux rubans est restée constante ($I_{W1}$ à W1 et $I_{W2}$ à W2), le déplacement n'est piloté que par l'application des signaux microonde aux différents guides d'onde de la puce Ach. Comme les courants dans W1 et W2 ainsi que le champ homogène 20 ne changent pas pendant la séquence le piège magnétique DC ne bouge pas (contrairement au document WO2017089489 où on éteint progressivement un fil pour en allumer un autre ce qui a pour effet de déplacer le piège magnétique DC). Dans l'invention ce sont uniquement les changements des champs micro-ondes (puissance, fréquence et guide dans lequel ils se propagent) qui permettent de déplacer les deux pièges habillés et donc de déplacer les atomes.

Dans la séquence temporelle d'interférométrie séparation/déplacement :

- les guides selon X de la première paire sont parcourus simultanément par des signaux microondes de pulsations unique $\omega$a ou $\omega$b, à certains instants dénommés premier ensemble d'instants E1 {t1, t2, t4, t5},

- au moins un des guides selon Y' de la deuxième paire (CPWY2 dans l'exemple) est parcouru par un signal microonde « somme de fréquence » formé de la superposition d'un signal microonde à une pulsation wa' et d'un signal microonde à une pulsation $\omega$b', à certains instants dénommés deuxième ensemble d'instants E2 { t2, t3, t4}.

E2 présente les instants t2 et t4 en commun avec E1.

Pour réaliser la trajectoire TZ précédente selon le premier exemple on a séparé les nuages selon X et repoussés ces nuages selon Y. On peut également générer la trajectoire TZ de l'autre côté, en allumant le guide CPWY1 avec le signal somme au lieu de CPWY2.

Pour augmenter la surface incluse dans la trajectoire fermée et donc la sensibilité de la mesure de la vitesse de rotation, selon une option on allume l'autre guide selon Y avec un signal somme, le guide CPWY1 dans l'exemple de la figure 10, après l'allumage du premier guide selon Y CPWY2. La séquence de déplacement et la trajectoire obtenue sont illustrés figure 11bis.

De manière symétrique selon un deuxième exemple on peut générer une trajectoire horizontale TZ en séparant selon Y et repoussant selon X, tel qu'illustré figures 12 et 13.

Selon un deuxième aspect l'invention concerne un capteur à atomes ultrafroids 20 permettant une mesure de vitesse de rotation selon au moins l'axe Z tel qu'illustré figure 14.

Le capteur 20 comprend une puce atomique Ach telle que décrite précédemment placée dans une enceinte à vide (non représentée) et une source d'atomes S agencée pour générer un nuage d'atomes ultrafroids 12 près du plan XY de la puce atomique Ach. Les atomes ultrafoids présentent, lors de la phase d'initialisation de la mise en œuvre du capteur, une superposition d'états internes |a> et |b>.

Le capteur 20 comprend également un générateur GB d'un champ magnétique homogène B0, préférentiellement parallèle au plan de la puce, au moins un processeur UT, au moins un générateur de tension ou de courant continu GDC adapté à commander des courants électriques dans lesdits rubans conducteurs et au moins un générateur de tension ou de courant micro-ondes GMW connecté audits guides d'ondes. Typiquement il peut y avoir un générateur GMW pour les 4 guides, ou 2 générateurs (1 pour chaque couple de guide) ou 4 générateurs (1 par guide). Les guides d'ondes selon X et Y' et les rubans conducteurs W1 et W2, sont configurés pour réaliser les étapes suivantes lors de la mise en œuvre du capteur :

D'abord l'énergie des atomes ultrafroids est modifiée de manière à créer un minima de potentiel pour les atomes ultrafroids dans l'état interne |a> et un minima de potentiel pour les atomes ultrafroids dans l'état interne |b>, formant ainsi un premier piège T1 et deuxième piège T2 à atomes ultrafroids, un piège permettant d'immobiliser un nuage d'atomes ultrafroids 12 dans un état interne différent de l'autre piège, à une distance maîtrisée h du plan de mesure (idem étapes A0 et B0).

Puis les deux pièges T1 et T2 sont séparés spatialement et déplacés suivant une première trajectoire TZ fermée comprise dans un plan perpendiculaire à Z parcourue dans un sens par les atomes ultrafroids du premier piège et dans le sens opposé par les atomes ultrafroids du deuxième piège.

Le capteur comprend également un système de détection d'intensité optique SDET adapté à mesurer au moins une population d'atomes ultrafroids dans un des états internes.

La puce Ach selon l'invention permet également la mesure d'une vitesse de rotation $\Omega x$ selon X avec des pièges parcourant une deuxième trajectoire fermée TX situé dans un plan perpendiculaire à X et la mesure d'une vitesse de rotation $\Omega y$ selon Y' avec des pièges parcourant une troisième trajectoire fermée TY' situé dans un plan perpendiculaire à Y'.

Pour cela selon un premier mode de réalisation on utilise la séquence interférométrique décrite dans le document FR2004743, le passage de h1 à h2 pour la réalisation des trajectoires « verticales » TX et TY' étant réalisé par application aux deux rubans de signaux continus à deux paliers (voir chronogramme de la figure 6). La largeur des rubans ne perturbe pas la mesure effectuée par le capteur.

Les inventeurs ont mis au point un deuxième mode de réalisation utilisant une nouvelle séquence interférométrique utilisant des signaux somme. En effet les inventeurs ont montré que l'application de ces signaux somme permettait de « repousser » les nuages atomiques vers le haut soit vers les Z positifs. Les inventeurs sont montré que la force de poussée n'est pas parfaitement horizontale mais contient une faible composante verticale, et lorsque l'on applique $\omega a$ (ou wa') à CPWX1 et CPWX2 en même temps on annule la composante horizontale et on exacerbe l'effet de la composante verticale. Cela a pour effet d'éloigner l'état |a> de la surface de la puce. De même si on applique $\omega b$ (ou $\omega b$') on éloigne l'état |b> de la puce. Et donc lorsqu'on applique un signal somme superposant $\omega a$ et $\omega b$ (wa' et wb') on éloigne les deux états |a> et |b> de la puce. Cet effet permet donc de générer des trajectoires verticales.

Un exemple de réalisation d'une trajectoire TX est illustré figure 15 et le chronogramme correspondant des puissances microonde appliquées aux guides et des intensités appliquées aux rubans est illustré figure 16.

Entre t0 et t1 la séquence est identique à la figure 10. Une fois les nuages séparés selon X, entre t1 et t2 on applique progressivement un signal somme [a'+b'] simultanément aux deux guides selon Y' jusqu'à une valeur maximale atteinte en t2. Cette application simultanée du signal somme aux deux guides selon Y' provoque un éloignement des nuages du plan initial, permettant d'opérer un passage d'une première hauteur h1 à une deuxième hauteur h2 pour les nuages atomiques 12, sans modifier leur position en x et y.

De t2 à t3 les nuages se rapprochent de X par diminution du signal microonde appliqué aux deux guides selon X, puis de t3 à t4 par inversion des fréquences appliquées les nuages se croisent et « passent de l'autre côté » de X.

De t4 à t5 la diminution progressive du signal somme appliqué aux deux guides selon Y' fait redescendre les deux nuages à h1, puis de t5 à t6 la diminution progressive des signaux à fréquence unique appliqués aux guides selon X provoque le rapprochement des nuages du point O et à t6 ils se retrouvent à l'aplomb de celui-ci.

Pendant toute la séquence les rubans W1 et W2 ont été soumis respectivement à une intensité $I_{W1}$ et $I_{W2}$ de valeur constante, les deux valeurs n'étant pas nécessairement identiques.

On a ainsi réalisé une trajectoire TX perpendiculaire à l'axe X telle qu'illustrée figure 5 en :

- appliquant simultanément aux guides selon X de la première paire des signaux microondes de pulsations $\omega a$ ou $\omega b$, à certains instants dénommé troisième ensemble d'instants E3 {t1, t2, t4, t5}

- appliquant simultanément aux guides selon Y' de la deuxième paire un signal microonde formé de la superposition d'un signal microonde à une pulsation $\omega a$' et d'un signal microonde de pulsation $\omega b$', pour opérer un passage de la première hauteur h1 à la deuxième hauteur h2, à certains instants dénommé quatrième ensemble d'instant E4 {t2, t3, t4} présentant des instants en commun avec le troisième ensemble d'instants,

- appliquant aux premier et deuxième rubans un courant constant (pas nécessairement identique) pendant la séparation, le déplacement et la recombinaison des pièges.

De même les figures 17 et 18 illustrent respectivement le parcours d'une trajectoire perpendiculaire à Y' et le chronogramme associé.

On a ainsi réalisé une trajectoire TY' perpendiculaire à l'axe Y' en :

- appliquant simultanément aux guides selon Y' de la deuxième paire des signaux microondes de pulsations $\omega a'$ ou $\omega b'$, à certains instants dénommé troisième ensemble d'instants E3 {t1, t2, t4, t5},

- appliquant simultanément aux guides selon X de la première paire un signal microonde formé de la superposition d'un signal microonde à une pulsation $\omega a$ et d'un signal microonde de pulsation $\omega b$, pour opérer un passage de la première hauteur h1 à la deuxième hauteur h2, à certains instants dénommé quatrième ensemble d'instant E4 {t2, t3, t4} présentant des instants en commun avec le troisième ensemble d'instants,

- appliquant aux premier et deuxième rubans un courant constant (pas nécessairement identique) pendant la séparation, le déplacement et la recombinaison des pièges.

L'avantage très important du capteur 20 intégrant une puce Ach selon l'invention est que l'on réalise, avec une géométrie simple à 4 guides d'onde et deux rubans conducteurs, un capteur gyroscopique 3 axes. L'originalité du capteur selon l'invention est d'une part la géométrie de la puce, et d'autre part d'appliquer, lors de sa mise en œuvre, à certains guides d'ondes et à certains instant, un signal somme tel que défini précédemment tout en appliquant un signal d'amplitude constante sur les rubans conducteurs.

Ce même capteur permet également une mesure d'horloge et une mesure d'accélération selon les deux axes X et Y'. Pour mesurer une accélération selon un axe de mesure, il convient de faire parcourir aux deux nuages un segment de droite perpendiculaire à l'axe de mesure. A titre d'exemple la figure 19 illustre le déplacement des nuages pour la mesure de $a_X$ et la figure 20 le chronogramme associé. On utilise simplement le signal à fréquence unique sur chaque guide selon X pour réaliser la séparation des deux nuages.

Selon un troisième aspect l'invention concerne un procédé de mesure d'une vitesse de rotation autour d'un axe X, Y' ou Z, dénommé axe de mesure, par un capteur à atomes ultrafroids comprenant une puce atomique selon l'invention. Le procédé comprend les étapes consistant à :

**A** Générer un nuage de dits atomes ultrafroids, incluant des phases d'émission desdits atomes, de refroidissement desdits atomes, d'initialisation desdits atomes dans au moins un état interne |a> et de piégeage d'un nuage de dits atomes ultrafroids dans un minimum local de potentiel, ledit piégeage s'effectuant par passage de courants continus dans le premier et le deuxième ruban,

**B** Initialiser les états internes en superposant de manière cohérente lesdits atomes ultrafroids entre ledit état |a> et un état interne |b> par une première impulsion $\pi / \mathbf{2}$ ;

**C** Séparer spatialement un nuage de dits atomes de dit état interne |a> dans un piège T1 d'un nuage de dits atomes de dit état interne |b> dans un autre piège T2, et déplacer lesdits pièges en sens opposé suivant une trajectoire fermée contenue dans un plan perpendiculaire à l'axe de mesure et initialisée à partir du point O,

- en appliquant une tension ou un courant à fréquences micro-ondes prédéterminées aux guides d'ondes selon une séquence prédéterminée,
- et en appliquant une valeur constante de tension ou de courant continu aux premier et deuxième rubans,

D Recombiner les états internes |a> et |b> en appliquant aux atomes ultrafroids une deuxième impulsion $\pi / \mathbf{2}$ puis mesurer le nombre d'atomes dans un état interne choisi parmi au moins |a> et |b> ;

E Déterminer la phase Sagnac desdits atomes ultrafroids et calculer la vitesse de rotation dudit capteur selon ledit axe de mesure.

Pour la mesure d'une vitesse de rotation autour de l'axe Z, pendant l'étape C la séquence inclut l'application à certains instants d'un signal microonde formé de la superposition d'un signal microonde à une pulsation $\omega a$ et d'un signal microonde de pulsation $\omega b$, à un des guides selon X de la première paire, ou l'application d'un signal microonde formé de la superposition d'un signal microonde à une pulsation wa' et d'un signal microonde de pulsation $\omega b'$, à un des guides selon Y' de la deuxième paire.

Pour la mesure d'une vitesse de rotation autour de l'axe X ou de l'axe Y', la séquence inclut :

- pour la mesure de la vitesse de rotation autour de l'axe X, l'application à certains instants d'un signal microonde formé de la superposition d'un signal microonde à une pulsation ωa et d'un signal microonde de pulsation ωb, simultanément aux deux guides selon X de la première paire,

- pour la mesure de la vitesse de rotation autour de l'axe Y', l'application à certains instants d'un signal microonde formé de la superposition d'un signal microonde à une pulsation ωa' et d'un signal microonde de pulsation ωb', simultanément aux deux guides selon Y' de la deuxième paire.

Pendant l'étape C de libre évolution, les puissances microondes appliquées aux différents guides d'onde sont fonction de l'axe de mesure (X, Y' ou Z) et du type de mesure (horloge, accélération, vitesse de rotation) choisis.

Selon une première variante la puce atomique Ach selon l'invention comprend au moins une paire additionnelle de guides d'ondes selon X plus éloignés de l'axe X que la première paire et au moins une paire additionnelle de guides d'ondes selon Y plus éloignés de l'axe Y que la deuxième paire. Un exemple de puce atomique selon cette variante est illustré figure 21 avec une paire additionnelle selon X (CPWX1', CPWX2') et une paire additionnelle selon Y (dans l'exemple Y'=Y) (CPWY1, CPWY2). De manière générale le nombre de paires additionnelles selon X n'est pas égal au nombre de paires additionnelles selon Y'. Pour des questions de symétrie du potentiel l'ajout d'un seul guide d'onde et non d'une paire ne présente pas d'intérêt pour une mesure d'accélération ou de vitesse de rotation.

Les inventeurs ont montré qu'une telle architecture permet d'augmenter les dimensions des trajectoires de mesure TX, TY' et TZ, et donc d'augmenter la sensibilité du capteur.

Un premier exemple de mesure de la vitesse de rotation selon Z Ωz est illustré figure 22 (déplacement spatial des nuages) et le chronogramme associé est donné figure 23. Dans cet exemple la mesure est effectuée en séparant selon X et repoussant selon Y. Les conventions sur les niveaux de gris et les traits sont identiques à celles des figures 10-13 et 15-20. La paire additionnelle selon X permet de séparer les atomes d'une distance d' supérieure à la distance d précédente, par allumage des guides d'onde additionnels selon X à des instants différents des instants d'allumage des guide (CPWX1, CPWX2).

Les guides (CPWX1', CPWX2') sont allumés avec respectivement (wa, ωb) en t2 après l'allumage des guides (CPWX1, CPWX2) en t1.

Puis en t3 un guide selon Y est allumé avec un signal somme [a'+b'], ici CPWY2, de manière à repousser les nuages du côté opposé, comme expliqué précédemment. Pour augmenter encore la dimension de TZ de t3 à t4 CPWY2 est éteint tandis que CPWY1 est allumé, ce qui repousse encore plus loin les atomes vers les x positifs, de la même manière que sur la figure 11bis. Selon une option (non représentée) on éteint CPWY1 et on allume CPWY1' pour éloigner encore les nuages. Dans l'absolu il n'est pas nécessaire d'éteindre un guide avant d'allumer le suivant mais maintenir allumé le guide précédent ne présente que peu d'avantage et consomme de la puissance microonde.

Les atomes sont ensuite rapprochés de X en éteignant CPWX1' et CPWX2' et allumant CPWX1 et CPWX2 (t4 à t5) puis les nuages se rejoignent en éteignant CPWX1 et CPWX2 (t5 à t6). Le guide CPWY2' est maintenu allumé avec le signal somme pour maintenir les atomes repoussés. Puis par inversion des fréquences et en reprenant les mêmes principes, la deuxième partie de la trajectoire est parcourue par chaque nuage (t7 à t12). Selon un autre exemple après t4 on pourrait également continuer à repousser les atomes vers les x positifs en allumant avec le signal somme le guide CPWY1'.

De même la mesure de Ωz peut être faite selon un deuxième exemple en séparant selon Y et repoussant selon X, tel qu'illustré figure 24 pour le déplacement spatial des nuages et figure 25 pour le chronogramme associé.

Ainsi lors de la mise en œuvre d'un capteur comprenant cette première variante de puce atomique, les guides selon X (respectivement Y' selon l'exemple choisi) de la au moins une paire additionnelle sont également parcourus simultanément par des signaux microondes de pulsations ωa ou ωb (respectivement wa' ou wb'), à certains instants différents du premier ensemble d'instants pour lesquels ce sont les guides selon X de la première paire initiale (respectivement les guides selon Y' de la deuxième paire initiale) qui sont allumés.

Avec la puce selon la première variante on peut également effectuer une mesure de vitesse de rotation selon l'axe X ou selon l'axe Y', en reprenant la séquence interférométrique illustrée figures 15 et 17, avec les modifications suivantes, permettant ici également d'augmenter la dimension des trajectoires TX et TY' et donc la sensibilité de la mesure.

Pour la mesure de Ωx, on effectue une séparation plus importante des nuages, d'une distance d'>d initial, en allumant en t2 les guides selon X de la paire additionnelle, comme déjà expliqué figure 22, et tel qu'illustré figure 26 pour le déplacement spatial des nuages et figure 27 pour le chronogramme associé. En t3, comme expliqué sur les figures 15 et 17 on allume les guides selon Y de la première paire pour « faire monter » les deux nuages d'atomes. Selon une option (non représentée) on allume également avec un signal somme les deux guides extérieurs selon Y CPWY1' et CPWY2'. Les nuages montent alors un peu plus haut.

De même les figures 28 et 29 illustrent le déplacement spatial des nuages et le chronogramme associé pour une mesure de vitesse de rotation selon l'axe Y selon le même principe.

Pour une mesure d'accélération ax ou ay on bénéficie également de la même manière de l'augmentation de la longueur du segment de droite pour la mesure.

Selon une deuxième variante, la puce selon l'invention est une puce atomique matricielle AchM telle que décrite figure 30. Celle-ci comprend un premier ensemble de N premiers rubans conducteurs W1n indicés n (N fils) et un deuxième ensemble de M deuxième rubans conducteurs W2m indicés m (M fils) perpendiculaires entre eux et formant respectivement des lignes et des colonnes d'une matrice. La figure 30 illustre un exemple dans lequel on a N=M=6. Les rubans du premier ensemble sont isolés électriquement des rubans du deuxième ensemble.

Chaque pixel (n, m) de la matrice forme une puce élémentaire Ach(n,m) telle que décrite dans la figure 9. Les puces élémentaires agencées en matrice sont localisées sur le même substrat.

On définit des axes Xk indicés k selon des premières diagonales Dk de la matrice, qui forment les diagonales Sud ouest-Nord est (SO/NE) de la matrice en considérant également les « diagonales » aux points extrêmes (1, 1), (N, M). On définit également des axes Yl indicés l selon des deuxièmes diagonales D'l perpendiculaires aux première diagonales, qui forment les diagonale Sud est-Nord ouest (SE/NO) de la matrice, en considérant également les « diagonales » aux points extrêmes (1, N), (M, 1). On a M+N-1 diagonales Dk (SO/NE) et M+N-1 diagonales D'l (SE/NO).

La puce matricielle comprend également des premières paires de guides d'onde (CPWX1, CPWX2) selon chaque axe Xk et des deuxième paires de guides d'onde (CPWY1, CPWY2) selon chaque axe Yl. Ainsi une première paire de guide selon Xk est commune à tous les pixels de la diagonale Dk de la matrice et une deuxième paire de guides selon Yl est commune à tous les pixels de la diagonale D'l de ladite matrice.

Chaque pixel de la matrice forme alors une puce élémentaire Ach(n,m) telle que décrite précédemment (voir figure 9). Les puces élémentaires agencées en matrice sont localisées sur le même substrat.

Préférentiellement la puce matricielle comprend 4 niveaux, chaque niveau comprenant les éléments d'un type choisi parmi : guides coplanaires selon Xk, guides coplanaires selon Yl, premiers rubans conducteurs, deuxième rubans conducteurs. Préférentiellement le plan supérieur (plan de mesure) est occupé par des guides d'onde.

La puce atomique matricielle AchM selon l'invention est compatible de la première variante de puce. Dans ce cas la puce matricielle comprend en outre :

- pour chaque axe Xk, au moins une paire additionnelle de guides d'ondes selon Xk plus éloignés de l'axe Xk que la première paire,

- pour chaque axe Yl, au moins une paire additionnelle de guides d'ondes selon Yl plus éloignés de l'axe Yl que la deuxième paire.

Selon un autre aspect l'invention concerne un capteur à atome ultrafroids intégrant une puce matricielle selon l'invention. Intégrées à un capteur, les puces élémentaires permettent d'effectuer en parallèle plusieurs mesures d'au moins une grandeur choisie parmi : ax , ay , Ωx, Ωy, Ωz. Elles peuvent également mesurer un temps t. Les mesures effectuées en parallèle tiennent compte des séquences appliquées aux guides d'ondes.

Les puces élémentaires sont de plus reconfigurables pour pouvoir effectuer d'autres mesures lors d'une autre séquence. La puce matricielle est reconfigurée selon les besoins : le type de mesure souhaité (ax, ay, Ωx, Ωy, Ωz, t), la précision souhaitée (fonction du nombre de puce réalisant simultanément la mesure), etc... On réalise ainsi sur une même puce matricielle des mesures en parallèle, redondantes et/ou complémentaires.

**Revendications**

1. Puce atomique (Ach) pour capteur à atomes ultrafroids, comportant un plan de mesure XY repéré par un axe X et un axe Y orthogonaux, ledit plan de mesure étant normal à un axe Z, la puce atomique comprenant :

   - une première paire de guides d'ondes constituée d'un premier et un deuxième guide d'ondes coplanaires (CPWX1, CPWX2), parallèles entre eux et disposés symétriquement de part et d'autre d'un axe dont la projection dans le plan XY est selon l'axe X, dénommés guides selon X,
   - une deuxième paire de guides d'ondes constituée d'un premier et un deuxième guide d'ondes coplanaires (CPWY'1, CPWY'2) parallèles entre eux et disposés symétriquement de part et d'autre d'un axe dont la projection dans le plan XY est selon un axe Y' différent de l'axe X, dénommés guides selon Y',

      les guides selon X étant isolés électriquement des guides selon Y',
      les projections des guides selon X et des guides selon Y' dans le plan XY formant à leur intersection un premier parallélogramme (P1) de centre O et présentant une première surface (S1),

- un premier ruban (W1) conducteur et un deuxième ruban (W2) conducteur agencés de sorte que leur projection respective dans le plan XY forment à leur intersection un deuxième parallélogramme (P2) également de centre O et présentant une deuxième surface (S2), lesdits rubans étant adaptés à être traversés par des courants continus,

- une intersection entre la première (S1) et la deuxième (S2) surface étant supérieure ou égale à 40% de la première surface (S1).

2. Puce atomique selon la revendication précédente dans laquelle le premier et le deuxième ruban sont respectivement orientés selon une première (D1) et une deuxième (D2) diagonale dudit premier parallélogramme.

3. Puce atomique selon l'une des revendications précédentes dans laquelle le premier (W1) et le deuxième (W2) ruban sont perpendiculaires entre eux.

4. Puce atomique selon l'une des revendications précédentes dans laquelle ladite deuxième paire de guides d'onde est perpendiculaire à ladite première paire de guides d'onde, l'axe Y' étant alors confondu avec l'axe Y.

5. Puce atomique selon l'une des revendications précédentes dans laquelle lesdits rubans sont perpendiculaires entre eux et lesdites paires de guide d'onde sont perpendiculaires entre elles et orientées à 45° desdits rubans.

6. Puce atomique (Ach) pour capteur à atomes ultrafroids selon l'une des revendications précédentes comprenant :

   - au moins une paire additionnelle de guides selon X plus éloignés de l'axe X que la première paire, et
   - au moins une paire additionnelle de guides selon Y' plus éloignés de l'axe Y' que la deuxième paire.

7. Capteur à atomes ultrafroids (20) permettant une mesure de vitesse de rotation ($\Omega z$) selon au moins l'axe Z comprenant :

   - une puce atomique (ACh) selon l'une des revendications 1 à 6 placée dans une enceinte à vide,
   - une source d'atomes (S) agencée pour générer un nuage (12) d'atomes ultrafroids près dudit plan XY de ladite puce atomique,
   lesdits atomes ultrafoids présentant, lors de la phase d'initialisation de la mise en œuvre du capteur, une superposition d'états internes |a> et |b>
   - un générateur (GB) d'un champ magnétique homogène (B0),
   - au moins un processeur (UT), au moins un générateur de tension ou de courant continu (GDC) connectés audits rubans et au moins un générateur de tension ou de courant micro-ondes (GMW) connecté audits guides d'ondes,
   - lesdits guides d'ondes et lesdits rubans étant configurés, lors de la mise en œuvre du capteur, pour :

     - modifier l'énergie desdits atomes ultrafroids de manière à créer un minima de potentiel pour les atomes ultrafroids dans l'état interne |a> et un minima de potentiel pour les atomes ultrafroids dans l'état interne |b>, formant ainsi un premier (T1) et deuxième (T2) pièges à atomes ultrafroids, un piège permettant d'immobiliser un nuage d'atomes ultrafroids (12) dans un état interne différent de l'autre piège, à une distance maîtrisée dudit plan de mesure, et
     - séparer spatialement les deux pièges et déplacer lesdits pièges (T1, T2) suivant au moins une première trajectoire fermée (TZ) comprise dans un plan perpendiculaire à Z, et parcourue dans un sens par les atomes ultrafroids du premier piège et dans le sens opposé par les atomes ultrafroids du deuxième piège,

   - le capteur comprenant en outre un système de détection d'intensité optique (SDET) adapté à mesurer au moins une population de dits atomes ultrafroids dans un dit état interne.

8. Capteur à atomes ultrafroids selon la revendication précédente dans lequel, lors de la séquence de séparation et de déplacement desdits pièges :

   - les guides selon X de la première paire sont parcourus simultanément par des signaux microondes de pulsations $\omega a$ ou $\omega b$, à certains instants dénommés premier ensemble d'instants,
   - au moins un des guides selon Y' de la deuxième paire est parcouru par un signal microonde formé de la superposition d'un signal microonde à une pulsation wa' et d'un signal microonde de pulsation $\omega b'$, à certains instants dénommés deuxième ensemble d'instants présentant des instants en commun avec le premier ensemble d'instants,

- les rubans étant chacun traversé d'un courant constant pendant la séparation, le déplacement et la recombinaison desdits pièges,
- le cas échéant les guides selon X de ladite au moins une paire additionnelle sont également parcourus simultanément par des signaux microondes de pulsations ωa ou ωb, à certains instants différents du premier ensemble d'instants.

9. Capteur à atomes ultrafroids selon la revendication 7 dans lequel, lors de la séquence de séparation et de déplacement desdits pièges:

- les guides selon Y' de la deuxième paire sont parcourus simultanément par des signaux microondes de pulsations wa' ou ωb', à certains instants dénommés premier ensemble d'instants,
- au moins un des guides selon X de la première paire est parcouru par un signal microonde formé de la superposition d'un signal microonde à une pulsation ωa et d'un signal microonde de pulsation ωb, à certains instants dénommés deuxième ensemble d'instants présentant des instants en commun avec le premier ensemble d'instants,
- les premier et deuxième rubans étant chacun traversé d'un courant constant pendant la séparation, le déplacement et la recombinaison des dits pièges,
- le cas échéant les guides selon Y' de l'au moins une paire additionnelle sont également parcourus simultanément par des signaux microondes de pulsations wa' ou ωb', à certains instants différents du premier ensemble d'instants.

10. Capteur à atomes ultrafroids (20) selon l'une des revendications 7 à 9 permettant en outre une mesure de vitesse de rotation selon les axes X et Y', dans lequel lesdits guides d'ondes et lesdits rubans sont en outre configurés,

- pour déplacer lesdits pièges (T1, T2) suivant une deuxième trajectoire fermée (TX) comprise dans un plan perpendiculaire à X, lors de la mesure de la vitesse de rotation (Ωx) selon l'axe X,
- pour déplacer lesdits pièges (T1, T2) suivant une troisième trajectoire fermée (TY') comprise dans un plan perpendiculaire à Y', lors de la mesure de la vitesse de rotation (Ωy') selon l'axe Y',
- lesdites trajectoires fermées étant parcourues dans un sens par les atomes ultrafroids du premier piège et dans le sens opposé par les atomes ultrafroids du deuxième piège, les deuxième et troisième trajectoires comprenant chacune au moins une première portion localisée à une première hauteur (h1) du plan XY et une deuxième portion localisée à une deuxième hauteur (h2) strictement supérieure à la première hauteur.

11. Capteur selon la revendication précédente dans lequel, lors de la mise en œuvre de la mesure de la vitesse de rotation (Ωx) selon l'axe X par génération de la deuxième trajectoire fermée (TX),

- les guides selon X de la première paire sont parcourus simultanément par des signaux microondes de pulsations ωa ou ωb, à certains instants dénommé troisième ensemble d'instants,
- les guides selon Y' de la deuxième paire sont simultanément parcourus par un signal microonde formé de la superposition d'un signal microonde à une pulsation wa' et d'un signal microonde de pulsation ωb' pour opérer un passage de la première hauteur à la deuxième hauteur, à certains instants dénommé quatrième ensemble d'instant présentant des instants en commun avec le troisième ensemble d'instants,
- les premier et deuxième rubans sont chacun traversé d'un courant constant pendant la séparation, le déplacement et la recombinaison des dits pièges,
- le cas échéant les guides selon X de ladite au moins une paire additionnelle sont également parcourus simultanément par des signaux microondes de pulsations ωa ou ωb, à certains instants différents du troisième ensemble d'instants.

12. Capteur selon la revendication 10 dans lequel, lors de la mise en œuvre de la mesure de la vitesse de rotation (Ωy') selon l'axe Y' par génération de la troisième trajectoire fermée (TY'),

- les guides selon Y' de la deuxième paire sont parcourus simultanément par des signaux microondes de pulsations wa' ou ωb', à certains instants dénommé troisième ensemble d'instants,
- les guides d'ondes selon X de la première paire sont simultanément parcourus par un signal microonde formé de la superposition d'un signal microonde à une pulsation ωa et d'un signal microonde de pulsation ωb pour opérer un passage de la première hauteur à la deuxième hauteur, à certains instants dénommé quatrième ensemble d'instant présentant des instants en commun avec le troisième ensemble d'instants,
- les premier et deuxième rubans sont chacun traversé d'un courant constant pendant la séparation, le déplacement et la recombinaison des dits pièges,
- le cas échéant les guides selon Y' de ladite au moins une paire additionnelle sont également parcourus simultanément par des signaux microondes de pulsations wa' ou ωb', à certains instants différents du troisième ensemble d'instants.

13. Puce atomique matricielle (AchM) selon l'une des revendications 1 à 6 comprenant :

- un premier ensemble de N premiers rubans conducteurs (W1n) indicés n et un deuxième ensemble de M deuxième rubans conducteurs (W2m) indicés m perpendiculaires entre eux et formant respectivement des N lignes et des M colonnes d'une matrice, les rubans du premier ensemble étant isolés électriquement des rubans du deuxième ensemble,
on définit des axes Xk indicés k selon des premières diagonales (Dk) de la matrice et des axes Yl indicés l selon des deuxièmes diagonales (D'l) perpendiculaires aux première diagonales,
la puce matricielle comprenant également des premières paires de guides d'onde selon chaque axe Xk et des deuxièmes paires de guides d'onde selon chaque axe Yl, chaque pixel de la matrice formant une puce élémentaire (Ach(n,m)).

14. Puce atomique matricielle selon la revendication précédente comprenant en outre :

- pour chaque axe Xk, au moins une paire additionnelle de guides selon Xk plus éloignés de l'axe Xk que la première paire,
- pour chaque axe Yl, au moins une paire additionnelle de guides selon Yl plus éloignés de l'axe Yl que la deuxième paire.

15. Capteur à atomes ultrafroids comprenant :

- une puce atomique matricielle selon l'une des revendications 13 ou 14,
- une source d'atomes (S) agencée pour générer un nuage (12) d'atomes ultrafroids près dudit plan XY de ladite puce atomique,
- un générateur (GB) d'un champ magnétique homogène (B0),
- au moins un processeur (UT), au moins un générateur de tension ou de courant continu (GDC) adapté à commander des courants électriques dans lesdits rubans et au moins un générateur de tension ou de courant micro-ondes (GMW) connecté audits guides d'ondes,
- un système de détection d'intensité optique (SDET),

le capteur étant adapté pour mesurer, selon les besoins et de manière reconfigurable, au moins une accélération (ax, ay) et/ ou une vitesse de rotation ($\Omega$x, $\Omega$y, $\Omega$z) selon une direction correspondant à celle des axes Xk et/ou des axes Yl, et/ou une vitesse de rotation ($\Omega$z) selon l'axe Z, à partir desdites puces élémentaires.

16. Procédé de mesure d'une vitesse de rotation autour d'au moins un axe dénommé axe de mesure, par un capteur à atomes ultrafroids comprenant une puce atomique, ladite puce atomique étant placée dans une enceinte à vide et comportant un plan de mesure XY repéré par un axe X et un axe Y orthogonaux, ledit plan de mesure étant normal à un axe Z, la puce atomique comprenant :

- une première paire de guides d'ondes constituée d'un premier et un deuxième guide d'ondes coplanaires (CPWX1, CPWX2), parallèles entre eux et disposés symétriquement de part et d'autre d'un axe dont la projection dans le plan XY est selon l'axe X, dénommés guides selon X,
- une deuxième paire de guides d'ondes constituée d'un premier et un deuxième guide d'ondes coplanaires (CPWY'1, CPWY'2) parallèles entre eux et disposés symétriquement de part et d'autre d'un axe dont la projection dans le plan XY est selon un axe Y', dénommés guides selon Y',

les guides selon X étant isolés électriquement des guides selon Y',
les projections des guides selon X et des guides selon Y' dans le plan XY formant à leur intersection un premier parallélogramme (P1) de centre O et présentant une première surface (S1),

- un premier ruban (W1) conducteur et un deuxième ruban (W2) conducteur agencés de sorte que leur projection respective dans le plan XY forment à leur intersection un deuxième parallélogramme (P2) également de centre O et présentant une deuxième surface (S2), lesdits rubans étant adaptés à être traversés par des courants continus,
- une intersection entre la première et la deuxième surface étant supérieure ou égale à 40% de la première surface (S1),

le procédé comprenant, pour la mesure de la vitesse de rotation selon Z, les étapes consistant à :

A Générer un nuage de dits atomes ultrafroids (12), incluant des phases d'émission desdits atomes, de refroidissement desdits atomes, d'initialisation desdits atomes dans au moins un état interne |a> et de piégeage d'un nuage de dits atomes ultrafroids dans un minimum local de potentiel, ledit piégeage s'effectuant par passage de courants continus dans le premier et le deuxième ruban,
B Initialiser des états internes en superposant de manière cohérente lesdits atomes ultrafroids entre ledit état |a> et un étant interne |b> différent de |a> par une première impulsion $\pi$ / **2** ;
C Séparer spatialement un nuage de dits atomes de dit état interne |a> dans un piège (T1) d'un nuage de dits atomes de dit état interne |b> dans un autre piège (T2), et déplacer lesdits pièges en sens opposé suivant une trajectoire fermée contenue dans un plan perpendiculaire à l'axe de mesure et initialisée à partir du point O:

- en appliquant une tension ou un courant à fréquences micro-ondes prédéterminées auxdits guides d'ondes selon une séquence prédéterminée,
- et en appliquant une valeur constante de tension ou de courant continu aux premier et deuxième rubans,

D Recombiner lesdits états internes |a> et |b> en appliquant auxdits atomes ultrafroids une deuxième impulsion $\pi$ / **2** puis mesurer le nombre d'atomes dans un état interne choisi parmi au moins |a> et |b> ;
E Déterminer la phase Sagnac desdits atomes ultrafroids et calculer la vitesse de rotation dudit capteur selon ledit axe de mesure.

17. Procédé de mesure selon la revendication précédente, pour la mesure d'une vitesse de rotation autour de l'axe Z, dans lequel pendant l'étape C ladite séquence inclut l'application à certains instants d'un signal microonde formé de la superposition d'un signal microonde à une pulsation $\omega$a et d'un signal microonde de pulsation $\omega$b, à un des guides selon X de la première paire, ou l'application d'un signal microonde formé de la superposition d'un signal microonde à une pulsation wa' et d'un signal microonde de pulsation $\omega$b', à un des guides selon Y' de la deuxième paire.

18. Procédé de mesure selon la revendication 16, pour la mesure d'une vitesse de rotation autour de l'axe X ou de l'axe Y', dans lequel pendant l'étape C ladite séquence inclut :

- pour la mesure de la vitesse de rotation autour de l'axe X, l'application à certains instants d'un signal microonde formé de la superposition d'un signal microonde à une pulsation $\omega$a et d'un signal microonde de pulsation $\omega$b, simultanément aux deux guides selon X de la première paire,
- pour la mesure de la vitesse de rotation autour de l'axe Y', l'application à certains instants d'un signal microonde formé de la superposition d'un signal microonde à une pulsation wa' et d'un signal microonde de pulsation $\omega$b', simultanément aux deux guides selon Y' de la deuxième paire.

## Patentansprüche

1. Atomchip (Ach) für einen Sensor mit ultrakalten Atomen, der eine XY-Messebene aufweist, die durch eine orthogonale X-Achse und eine orthogonale Y-Achse bestimmt ist, wobei die Messebene zu einer Z-Achse normal ist, wobei der Atomchip Folgendes umfasst:

- ein erstes Paar von Wellenleitern, das aus einem ersten und einem zweiten koplanaren Wellenleiter (CPWX1, CPWX2) besteht, die zueinander parallel und auf beiden Seiten einer Achse symmetrisch angeordnet sind, deren Projektion in der XY-Ebene entlang der X-Achse verläuft, die als Leiter entlang X bezeichnet werden,
- ein zweites Paar von Wellenleitern, das aus einem ersten und einem zweiten koplanaren Wellenleiter (CPWY'1, CPWY'2) besteht, die zueinander parallel und auf beiden Seiten einer Achse symmetrisch angeordnet sind, deren Projektion in der XY-Ebene entlang einer Y'-Achse, die sich von der X-Achse unterscheidet, verläuft, die als Leiter entlang Y' bezeichnet werden,

wobei die Leiter entlang X elektrisch von den Leitern entlang Y' isoliert sind,
wobei die Projektionen der Leiter entlang X und der Leiter entlang Y' in der XY-Ebene an ihrem Kreuzungspunkt ein erstes Parallelogramm (P1) mit einem Zentrum O bilden und eine erste Oberfläche (S1) aufweisen,

- ein erstes Leitungsband (W1) und ein zweites Leitungsband (W2), die derart angeordnet sind, dass ihre jeweilige Projektion in der XY-Ebene an ihrem Kreuzungspunkt ein zweites Parallelogramm (P2) auch mit einem Zentrum O bildet und eine zweite Oberfläche (S2) aufweist, wobei die Bänder dafür geeignet sind, von Gleichströmen durchflossen zu werden,
- wobei ein Kreuzungspunkt zwischen der ersten (S1) und der zweiten (S2) Oberfläche größer als oder gleich 40 % der ersten Oberfläche (S1) ist.

2. Atomchip nach dem vorhergehenden Anspruch, wobei das erste und das zweite Band jeweils entlang einer ersten (D1) und einer zweiten (D2) Diagonale des ersten Parallelogramms ausgerichtet sind.

3. Atomchip nach einem der vorhergehenden Ansprüche, wobei das erste (W1) und das zweite (W2) Band senkrecht zueinander sind.

4. Atomchip nach einem der vorhergehenden Ansprüche, wobei das zweite Paar von Wellenleitern senkrecht zum ersten Paar von Wellenleitern steht, wobei die Y'-Achse dann mit der Y-Achse zusammenfällt.

5. Atomchip nach einem der vorhergehenden Ansprüche, wobei die Bänder senkrecht zueinander sind und die Paare von Wellenleitern senkrecht zueinander und mit 45° zu den Bändern ausgerichtet sind.

6. Atomchip (Ach) für einen Sensor mit ultrakalten Atomen nach einem der vorhergehenden Ansprüche, umfassend:

- mindestens ein zusätzliches Leiterpaar entlang X, das von der X-Achse weiter entfernt ist als das erste Paar, und
- mindestens ein zusätzliches Leiterpaar entlang Y', das von der Y'-Achse weiter entfernt ist als das zweite Paar.

7. Sensor mit ultrakalten Atomen (20), der eine Rotationsgeschwindigkeitsmessung ($\Omega z$) entlang mindestens der Z- Achse ermöglicht, umfassend:

- einen Atomchip (ACh) nach einem der Ansprüche 1 bis 6, der in einer Vakuumkammer platziert ist,
- eine Atomquelle (S), die angeordnet ist, um eine Wolke (12) aus ultrakalten Atomen in der Nähe der XY-Ebene des Atomchips zu erzeugen,
wobei die ultrakalten Atome während der Initialisierungsphase der Implementierung des Sensors eine Überlagerung von internen Zuständen |a> und |b> aufweisen,
- einen Generator (GB) für ein homogenes Magnetfeld (B0),
- mindestens einen Prozessor (UT), mindestens einen Gleichstrom- oder Spannungsgenerator (GDC), der mit den Bändern verbunden ist, und mindestens einen Mikrowellenstrom- oder Spannungsgenerator (GMW), der mit den Wellenleitern verbunden ist,
- wobei die Wellenleiter und die Bänder dafür konfiguriert sind, bei Implementierung des Sensors:
- die Energie der ultrakalten Atome derart zu modifizieren, dass ein Potentialminimum für die ultrakalten Atome im internen Zustand |a> geschaffen wird, und ein Potentialminimum für die ultrakalten Atome im internen Zustand | b> geschaffen wird, wodurch eine erste (T1) und eine zweite (T2) Falle für ultrakalte Atome gebildet werden, wobei es eine Falle ermöglicht, eine Wolke von ultrakalten Atomen (12) in einem internen Zustand, der sich von der anderen Falle unterscheidet, in einem beherrschten Abstand von der Messebene zu immobilisieren, und
- die beiden Fallen räumlich zu trennen und die Fallen (T1, T2), folgend mindestens einer ersten geschlossenen Trajektorie (TZ), die in einer Ebene senkrecht zu Z umfasst ist, zu verschieben und in einer Richtung von den ultrakalten Atomen der ersten Falle und in der entgegengesetzten Richtung von den ultrakalten Atomen der zweiten Falle durchlaufen zu werden,
- wobei der Sensor ferner ein System zum Erkennen der optischen Intensität (SDET) umfasst, das dazu geeignet ist, mindestens eine Population der ultrakalten Atome in einem internen Zustand zu messen.

8. Sensor mit ultrakalten Atomen nach dem vorhergehenden Anspruch, wobei während des Ablaufs der Trennung und Verschiebung der Fallen:

- die Leiter entlang X des ersten Paares gleichzeitig von Mikrowellensignalen mit den Winkelfrequenzen $\omega a$ oder $\omega b$ zu bestimmten Momenten, die als erster Satz von Momenten bezeichnet werden, durchlaufen werden,
- mindestens einer der Leiter entlang Y' des zweiten Paares von einem Mikrowellensignal durchlaufen wird, das durch die Überlagerung eines Mikrowellensignals mit einer Winkelfrequenz $\omega a$' und eines Mikrowellensignals mit der Winkelfrequenz ωb' gebildet ist, zu bestimmten Momenten, die als zweiter Satz von Momenten bezeichnet werden, die Momente aufweisen, die mit dem ersten Satz von Momenten gemeinsam sind,
- wobei die Bänder jeweils von einem konstanten Strom während der Trennung, der Verschiebung und der Rekombination der Fallen durchflossen werden,
- die Leiter entlang X des mindestens einen zusätzlichen Paares gegebenenfalls auch gleichzeitig von Mikrowellensignalen mit den Winkelfrequenzen ωa oder ωb zu bestimmten Momenten durchlaufen werden, die sich von dem ersten Satz von Momenten unterscheiden.

**9.** Sensor mit ultrakalten Atomen nach Anspruch 7, wobei während des Ablaufs der Trennung und Verschiebung der Fallen:

- die Leiter entlang Y' des zweiten Paares gleichzeitig von Mikrowellensignalen mit den Winkelfrequenzen ωa' oder ωb' zu bestimmten Momenten, die als erster Satz von Momenten bezeichnet werden, durchlaufen werden,
- mindestens einer der Leiter entlang X des ersten Paares von einem Mikrowellensignal durchlaufen wird, das durch die Überlagerung eines Mikrowellensignals mit einer Winkelfrequenz ωa und eines Mikrowellensignals mit der Winkelfrequenz ωb gebildet ist, zu bestimmten Momenten, die als zweiter Satz von Momenten bezeichnet werden, der Momente aufweist, die mit dem ersten Satz von Momenten gemeinsam sind,
- wobei das erste und das zweite Band jeweils von einem konstanten Strom während der Trennung, der Verschiebung und der Rekombination der Fallen durchflossen werden,
- die Leiter entlang Y' des mindestens einen zusätzlichen Paares gegebenenfalls auch gleichzeitig von Mikrowellensignalen mit den Winkelfrequenzen ωa' oder ωb' zu bestimmten Momenten durchlaufen werden, die sich von dem ersten Satz von Momenten unterscheiden.

**10.** Sensor mit ultrakalten Atomen (20) nach einem der Ansprüche 7 bis 9, der ferner eine Messung der Rotationsgeschwindigkeit entlang der X- und Y'-Achse ermöglicht, wobei die Wellenleiter und die Bänder ferner dafür konfiguriert sind,

- die Fallen (T1, T2), einer zweiten geschlossenen Trajektorie (TX) folgend, die in einer Ebene senkrecht zu X umfasst ist, während der Messung der Rotationsgeschwindigkeit (Ωx) entlang der X-Achse zu verschieben,
- die Fallen (T1, T2), einer dritten geschlossenen Trajektorie (TY') folgend, die in einer Ebene senkrecht zu Y' umfasst ist, während der Messung der Rotationsgeschwindigkeit (Ωy') entlang der Y'-Achse zu verschieben,
- wobei die geschlossenen Trajektorien in einer Richtung von den ultrakalten Atomen der ersten Falle und in der entgegengesetzten Richtung von den ultrakalten Atomen der zweiten Falle durchlaufen werden, wobei die zweite und die dritte Trajektorie jeweils mindestens einen ersten lokalisierten Abschnitt auf einer ersten Höhe (h1) der XY-Ebene und einen zweiten lokalisierten Abschnitt auf einer zweiten Höhe (h2), die deutlich höher als die erste Höhe ist, umfassen.

**11.** Sensor nach dem vorhergehenden Anspruch, wobei bei der Implementierung der Messung der Rotationsgeschwindigkeit (Ωx) entlang der X-Achse durch Generieren der zweiten geschlossenen Trajektorie (TX)

- die Leiter entlang X des ersten Paares gleichzeitig von Mikrowellensignalen der Winkelfrequenzen ωa oder ωb zu bestimmten Momenten, die als dritter Satz von Momenten bezeichnet werden, durchlaufen werden,
- die Leiter entlang Y' des zweiten Paares gleichzeitig von einem Mikrowellensignal durchlaufen werden, das durch die Überlagerung eines Mikrowellensignals mit einer Winkelfrequenz ωa' und eines Mikrowellensignals mit einer Winkelfrequenz ωb' gebildet ist, um einen Übergang von der ersten Höhe zur zweiten Höhe zu betreiben, zu bestimmten Momenten, die als vierter Satz von Momenten bezeichnet werden, die Momente aufweisen, die mit dem dritten Satz von Momenten gemeinsam sind,
- das erste und das zweite Band während der Trennung, der Verschiebung und der Rekombination der Fallen jeweils von einem konstanten Strom durchflossen werden,
- die Leiter entlang X des mindestens einen zusätzlichen Paares gegebenenfalls auch gleichzeitig von Mikrowellensignalen mit den Winkelfrequenzen ωa oder ωb zu bestimmten Momenten durchlaufen werden, die sich von dem ersten Satz von Momenten unterscheiden.

**12.** Sensor nach Anspruch 10, wobei bei der Implementierung der Messung der Rotationsgeschwindigkeit (Ωy') entlang der Y'-Achse durch Generieren der dritten geschlossenen Trajektorie (TY')

- die Leiter entlang Y' des zweiten Paares gleichzeitig von Mikrowellensignalen mit den Winkelfrequenzen ωa' oder ωb' zu bestimmten Momenten, die als dritter Satz von Momenten bezeichnet werden, durchlaufen werden,

- die Leiter entlang X des ersten Paares gleichzeitig von einem Mikrowellensignal durchlaufen werden, das durch die Überlagerung eines Mikrowellensignals mit einer Winkelfrequenz $\omega a$ und eines Mikrowellensignals mit der Winkelfrequenz $\omega b$ gebildet ist, um einen Übergang von der ersten Höhe zur zweiten Höhe zu betreiben, zu bestimmten Momenten, die als vierter Satz von Momenten bezeichnet werden, die Momente aufweisen, die mit dem dritten Satz von Momenten gemeinsam sind,

- das erste und das zweite Band während der Trennung, der Verschiebung und der Rekombination der Fallen jeweils von einem konstanten Strom durchflossen werden,

- die Leiter entlang Y' des mindestens einen zusätzlichen Paares gegebenenfalls auch gleichzeitig von Mikrowellensignalen mit den Winkelfrequenzen $\omega a'$ oder $\omega b'$ zu bestimmten Momenten durchlaufen werden, die sich von dem dritten Satz von Momenten unterscheiden.

13. Matrix-Atomchip (AchM) nach einem der Ansprüche 1 bis 6, umfassend:

- einen ersten Satz von N ersten Leitungsbändern (W1n) mit dem Index n und einen zweiten Satz von M zweiten Leitungsbändern (W2m) mit dem Index m, die zueinander senkrecht sind und jeweils N Zeilen und M Spalten einer Matrix bilden, wobei die Bänder des ersten Satzes elektrisch von den Bändern des zweiten Satzes isoliert sind,

Xk-Achsen mit dem Index k sind entlang ersten Diagonalen (Dk) der Matrix definiert und Yl-Achsen mit dem Index l sind entlang zweiten Diagonalen (D'l) senkrecht zu den ersten Diagonalen definiert,

wobei der Matrixchip auch erste Paare von Wellenleitern entlang jeder Xk-Achse und zweite Paare von Wellenleitern entlang jeder Yl-Achse umfasst, wobei jedes Pixel der Matrix einen Elementarchip (Ach(n,m)) bildet.

14. Matrix-Atomchip nach einem der vorhergehenden Ansprüche, ferner umfassend:

- für jede Xk-Achse mindestens ein zusätzliches Leiterpaar entlang Xk, die von der Xk-Achse weiter entfernt sind als das erste Paar,

- für jede Yl-Achse mindestens ein zusätzliches Leiterpaar entlang Yl, die von der Yl-Achse weiter entfernt sind als das zweite Paar.

15. Sensor mit ultrakalten Atomen, umfassend:

- einen Matrix-Atomchip nach einem der Ansprüche 13 oder 14,

- eine Atomquelle (S), die angeordnet ist, um eine Wolke (12) aus ultrakalten Atomen in der Nähe der XY-Ebene des Atomchips zu erzeugen,

- einen Generator (GB) für ein homogenes Magnetfeld (B0),

- mindestens einen Prozessor (UT), mindestens einen Gleichstrom- oder Spannungsgenerator (GDC), der dazu geeignet ist, elektrische Ströme in den Bändern zu steuern, und mindestens einen Mikrowellenstrom- oder Spannungsgenerator (GMW), der mit den Wellenleitern verbunden ist,

- ein System zum Erkennen der optischen Intensität (SDET),

wobei der Sensor dafür geeignet ist, gemäß dem Bedarf und rekonfigurierbar mindestens eine Beschleunigung (ax, ay) und/oder eine Rotationsgeschwindigkeit ($\Omega x$, $\Omega y$, $\Omega z$) in einer Richtung entsprechend derjenigen der Xk-Achse und/oder der Yl-Achse und/oder eine Rotationsgeschwindigkeit ($\Omega z$) entlang der Z-Achse, ausgehend von den Elementarchips, zu messen.

16. Verfahren zum Messen einer Rotationsgeschwindigkeit um mindestens eine Achse, die als Messachse bezeichnet wird, durch einen Sensor mit ultrakalten Atomen, umfassend einen Atomchip, wobei der Atomchip in einer Vakuumkammer platziert wird und eine XY-Messebene aufweist, die durch eine orthogonale X-Achse und eine orthogonale Y-Achse bestimmt sind, wobei die Messebene zu einer Z-Achse normal ist, wobei der Atomchip umfasst:

- ein erstes Paar von Wellenleitern, das aus einem ersten und einem zweiten koplanaren Wellenleiter (CPWX1, CPWX2) besteht, die zueinander parallel und auf beiden Seiten einer Achse symmetrisch angeordnet sind, deren Projektion in der XY-Ebene entlang der X-Achse verläuft, die als Leiter entlang X bezeichnet werden,

- ein zweites Paar von Wellenleitern, das aus einem ersten und einem zweiten koplanaren Wellenleiter (CPWY'1, CPWY'2) besteht, die zueinander parallel und auf beiden Seiten einer Achse symmetrisch angeordnet sind, deren Projektion in der XY-Ebene entlang einer Y'-Achse verläuft, die als Leiter entlang Y' bezeichnet werden,

wobei die Leiter entlang X elektrisch von den Leitern entlang Y' isoliert sind,
wobei die Projektionen der Leiter entlang X und der Leiter entlang Y' in der XY-Ebene an ihrem Kreuzungspunkt ein erstes Parallelogramm (P1) mit einem Zentrum O bilden und eine erste Oberfläche (S1) aufweisen,

- ein erstes Leitungsband (W1) und ein zweites Leitungsband (W2), die derart angeordnet sind, dass ihre jeweilige Projektion in der XY-Ebene an ihrem Kreuzungspunkt ein zweites Parallelogramm (P2) auch mit einem Zentrum O bildet und eine zweite Oberfläche (S2) aufweist, wobei die Bänder dazu geeignet sind, von Gleichströmen durchflossen zu werden,
- wobei ein Kreuzungspunkt zwischen der ersten und der zweiten Oberfläche größer als oder gleich 40 % der ersten Oberfläche (S1) ist,

wobei das Verfahren zum Messen der Rotationsgeschwindigkeit entlang Z die Schritte umfasst, bestehend aus Folgendem:

A Erzeugen einer Wolke der ultrakalten Atome (12), einschließlich Phasen der Emission der Atome, der Kühlung der Atome, der Initialisierung der Atome in mindestens einem internen Zustand |a> und des Fangens einer Wolke der ultrakalten Atome in einem lokalen Potentialminium, wobei das Fangen durch den Durchgang von Gleichströmen in dem ersten und dem zweiten Band erfolgt,
B Initialisieren der internen Zustände durch kohärentes Überlagern der ultrakalten Atome zwischen dem Zustand |a> und einem internen Zustand |b>, der sich von |a> unterscheidet, durch einen ersten Impuls $\pi/2$;
C räumliches Trennen einer Wolke der Atome des internen Zustands |a> in einer Falle (T1) von einer Wolke der Atome des internen Zustands |b> in einer anderen Falle (T2) und Verschieben der Fallen in entgegengesetzter Richtung folgend einer geschlossenen Trajektorie, die in einer Ebene senkrecht zur Messachse enthalten ist und ausgehend vom Punkt O initialisiert wird:

- durch Anlegen eines Stroms oder einer Spannung mit vorbestimmten Mikrowellenfrequenzen an die Wellenleiter gemäß einer vorbestimmten Abfolge,
- und durch Anlegen eines konstanten Gleichstrom- oder Spannungswertes an das erste und das zweite Band,

D Rekombinieren der internen Zustände |a> und |b> durch Anlegen eines zweiten Impulses $\pi/2$ an die ultrakalten Atome, dann Messen der Anzahl der Atome in einem internen Zustand, ausgewählt mindestens aus |a> und |b>;
E Bestimmen der Sagnac-Phase der ultrakalten Atome und Berechnen der Rotationsgeschwindigkeit des Sensors entlang der Messachse,

**17.** Messverfahren nach dem vorhergehenden Anspruch zum Messen einer Rotationsgeschwindigkeit um die Z-Achse, wobei während Schritt C die Abfolge das Anlegen, zu bestimmten Momenten, eines Mikrowellensignals, das durch die Überlagerung eines Mikrowellensignals mit einer Winkelfrequenz $\omega a$ und eines Mikrowellensignals mit der Winkelfrequenz $\omega b$ gebildet wird, an einen der Leiter entlang X des ersten Paares, oder das Anlegen eines Mikrowellensignals einschließt, das durch die Überlagerung eines Mikrowellensignals mit einer Winkelfrequenz $\omega a'$ und eines Mikrowellensignals mit der Winkelfrequenz $\omega b'$ gebildet wird, an einen der Leiter entlang Y' des zweiten Paares.

**18.** Messverfahren nach Anspruch 16 zum Messen einer Rotationsgeschwindigkeit um die X-Achse oder Y'-Achse, wobei der Ablauf während des Schritts C Folgendes einschließt:

- zum Messen der Rotationsgeschwindigkeit um die X-Achse, das Anlegen, zu bestimmten Momenten, eines Mikrowellensignals, das durch die Überlagerung eines Mikrowellensignals mit einer Winkelfrequenz $\omega a$ und eines Mikrowellensignals mit der Winkelfrequenz $\omega b$ gebildet wird, gleichzeitig an beide Leiter entlang X des ersten Paares,
- zum Messen der Rotationsgeschwindigkeit um die Y'-Achse, das Anlegen, zu bestimmten Momenten, eines Mikrowellensignals, das durch die Überlagerung eines Mikrowellensignals mit einer Winkelfrequenz $\omega a'$ und eines Mikrowellensignals mit der Winkelfrequenz $\omega b'$ gebildet wird, gleichzeitig an beide Leiter entlang Y' des zweiten Paares.

Claims

1. An atom chip (Ach) for an ultra-cold atom sensor, containing a measurement plane XY defined by an axis X and an axis Y that are orthogonal, said measurement plane being normal to an axis Z, the atom chip comprising:

   - a first pair of waveguides consisting of a first and a second waveguide (CPWX1, CPWX2) that are coplanar, parallel to one another and arranged symmetrically on either side of an axis whose projection in the plane XY is along the axis X, called guides along X,
   - a second pair of waveguides consisting of a first and a second waveguide (CPWY'1, CPWY'2) that are coplanar, parallel to one another and arranged symmetrically on either side of an axis whose projection in the plane XY is along an axis Y' different from the axis X, called guides along Y',

     the guides along X being electrically insulated from the guides along Y';
     the projections of the guides along X and the guides along Y' in the plane XY forming, at their intersection, a first parallelogram (P1) with a centre O and having a first surface (S1),

   - a first conductive strip (W1) and a second conductive strip (W2) arranged such that their respective projection in the plane XY forms, at their intersection, a second parallelogram (P2) also with a centre O and having a second surface (S2), said strips being adapted to be flowed through by direct currents,
   - an intersection between the first (S1) and the second (S2) surface being greater than or equal to 40% of the first surface (S1).

2. The atom chip according to the preceding claim, wherein the first and the second strip are respectively oriented along a first (D1) and a second (D2) diagonal of said first parallelogram.

3. The atom chip according to one of the preceding claims, wherein the first (W1) and the second (W2) strip are perpendicular to one another.

4. The atom chip according to one of the preceding claims, wherein said second pair of waveguides is perpendicular to said first pair of waveguides, the axis Y' then being coincident with the axis Y.

5. The atom chip according to one of the preceding claims, wherein said strips are perpendicular to one another and said pairs of waveguides are perpendicular to one another and oriented at 45° from said strips.

6. The atom chip (Ach) for an ultra-cold atom sensor according to one of the preceding claims, comprising:

   - at least one additional pair of guides along X that are further away from the axis X than the first pair, and
   - at least one additional pair of guides along Y' that are further away from the axis Y' than the second pair.

7. An ultra-cold atom sensor (20) allowing a rotational velocity ($\Omega z$) measurement along at least the axis Z comprising:

   - an atom chip (ACh) according to one of Claims 1 to 6 placed in a vacuum chamber,
   - an atom source (S) arranged to generate a cloud (12) of ultra-cold atoms close to said plane XY of said atom chip, said ultra-cold atoms having, during the initialisation phase of the implementation of the sensor, a superposition of internal states |a> and |b>,
   - a generator (GB) of a homogeneous magnetic field (B0),
   - at least one processor (UT), at least one direct current or voltage generator (GDC) connected to said strips and at least one microwave current or voltage generator (GMW) connected to said waveguides,
   - said waveguides and said strips being configured, during implementing the sensor, to:
   - modify the energy of said ultra-cold atoms so as to create a potential minimum for the ultra-cold atoms in the internal state |a> and a potential minimum for the ultra-cold atoms in the internal state |b>, thus forming a first ultra-cold-atom trap (T1) and a second ultra-cold-atom trap (T2), one trap allowing to immobilise a cloud of ultra-cold atoms (12) in an internal state different from the other trap, at a managed distance from said measurement plane, and
   - spatially separate the two traps and move said traps (T1, T2) following at least one first closed path (TZ) comprised in a plane perpendicular to Z, and be passed through, in one direction, by the ultra-cold atoms of the first trap and, in the opposite direction, by the ultra-cold atoms of the second trap,
   - the sensor further comprising a system for detecting optical intensity (SDET), adapted to measure at least one population of said ultra-cold atoms in a said internal state.

8. The ultra-cold atom sensor according to the preceding claim, wherein, in the sequence of separating and moving said traps:

- the guides along X of the first pair are passed through simultaneously by microwave signals with angular frequencies ωa or ωb, at certain times called first set of times,
- at least one of the guides along Y' of the second pair is passed through by a microwave signal formed by the superposition of a microwave signal with an angular frequency ωa' and a microwave signal with an angular frequency ωb', at certain times called second set of times having times in common with the first set of times,
- the strips each being flowed through by a constant current during the separation, the movement and the recombination of said traps,
- where applicable, the guides along X of said at least one additional pair are also passed through simultaneously by microwave signals with angular frequencies ωa or ωb, at certain times different from the first set of times.

9. The ultra-cold atom sensor according to claim 7, wherein, in the sequence of separating and moving said traps:

- the guides along Y' of the second pair are passed through simultaneously by microwave signals with angular frequencies ωa' or ωb', at certain times called first set of times,
- at least one of the guides along X of the first pair is passed through by a microwave signal formed by the superposition of a microwave signal with an angular frequency ωa and a microwave signal with an angular frequency ωb, at certain times called second set of times having times in common with the first set of times,
- the first and second strips each being flowed through by a constant current during the separation, the movement and the recombination of said traps,
- where applicable the guides along Y' of the at least one additional pair are also passed through simultaneously by microwave signals with angular frequencies ωa' or ωb', at certain times different from the first set of times.

10. The ultra-cold atom sensor (20) according to one of claims 7 to 9, further allowing a rotational velocity measurement along the axes X and Y', wherein said waveguides and said strips are further configured

- to move said traps (T1, T2) following a second closed path (TX) comprised in a plane perpendicular to X, during the rotational velocity (Ωx) measurement along the axis X,
- to move said traps (T1, T2) following a third closed path (TY') comprised in a plane perpendicular to Y', during the rotational velocity (Ωy') measurement along the axis Y',
- said closed paths being passed through in one direction by the ultra-cold atoms of the first trap and in the opposite direction by the ultra-cold atoms of the second trap, the second and third paths each comprising at least one first portion located at a first height (h1) from the plane XY and a second portion located at a second height (h2) strictly greater than the first height.

11. The sensor according to the preceding claim, wherein, when implementing the measurement of the rotational velocity (Ωx) along the axis X by generating the second closed path (TX),

- the guides along X of the first pair are passed through simultaneously by microwave signals with angular frequencies ωa or ωb, at certain times called third set of times,
- the guides along Y' of the second pair are simultaneously passed through by a microwave signal formed by the superposition of a microwave signal with an angular frequency ωa' and a microwave signal with an angular frequency ωb' to switch from the first height to the second height, at certain times called fourth set of times having times in common with the third set of times,
- the first and second strips are each flowed through by a constant current during the separation, the movement and the recombination of said traps,
- where applicable, the guides along X of said at least one additional pair are also passed through simultaneously by microwave signals with angular frequencies ωa or ωb, at certain times different from the third set of times.

12. The sensor according to claim 10, wherein, when implementing the measurement of the rotational velocity (Ωy') along the axis Y' by generating the third closed path (TY'),

- the guides along Y' of the second pair are passed through simultaneously by microwave signals with angular frequencies ωa' or ωb', at certain times called third set of times,

- the waveguides along X of the first pair are simultaneously passed through by a microwave signal formed by the superposition of a microwave signal with an angular frequency $\omega a$ and a microwave signal with an angular frequency $\omega b$ to switch from the first height to the second height, at certain times called fourth set of times having times in common with the third set of times,
- the first and second strips are each flowed through by a constant current during the separation, the movement and the recombination of said traps,
- where applicable, the guides along Y' of said at least one additional pair are also passed through simultaneously by microwave signals with angular frequencies $\omega a$' or $\omega b$', at certain times different from the third set of times.

13. A matrix atom chip (AchM) according to one of claims 1 to 6 comprising:

- a first set of N first conductive strips (W1n) indexed n and a second set of M second conductive strips (W2m) indexed m that are perpendicular to one another and respectively form N rows and M columns of a matrix, the strips of the first set being electrically insulated from the strips of the second set,
axes Xk indexed k are defined along first diagonals (Dk) of the matrix and axes Yl indexed l are defined along second diagonals (D'l) perpendicular to the first diagonals,
the matrix chip also comprising first pairs of waveguides along each axis Xk and second pairs of waveguides along each axis Yl, each pixel of the matrix forming an elementary chip (Ach(n,m)).

14. The matrix atom chip according to the preceding claim, further comprising:

- for each axis Xk, at least one additional pair of guides along Xk that are further away from the axis Xk than the first pair,
- for each axis Yl, at least one additional pair of guides along Yl that are further away from the axis Yl than the second pair.

15. An ultra-cold atom sensor comprising:

- a matrix atom chip according to any one of claims 13 or 14,
- an atom source (S) arranged to generate a cloud (12) of ultra-cold atoms close to said plane XY of said atom chip,
- a generator (GB) of a homogeneous magnetic field (B0),
- at least one processor (UT), at least one direct current or voltage generator (GDC) adapted to control electric currents in said strips, and at least one microwave current or voltage generator (GMW) connected to said waveguides,
- an optical intensity detection system (SDET),

the sensor being adapted to measure, according to requirements and in a reconfigurable manner, at least one acceleration (ax, ay) and/or rotational velocity ($\Omega x$, $\Omega y$, $\Omega z$) in a direction corresponding to that of the axis Xk and/or the axis Yl, and/or a rotational velocity ($\Omega z$) along the axis Z, from said elementary chips.

16. A method for measuring a rotational velocity about at least one axis called measurement axis, by an ultra-cold atom sensor comprising an atom chip, said atom chip being placed in a vacuum chamber and containing a measurement plane XY defined by an axis Z and an axis Y that are orthogonal, said measurement plane being normal to an axis Z, the atom chip comprising:

- a first pair of waveguides consisting of a first and a second waveguide (CPWX1, CPWX2) that are coplanar, parallel to one another and arranged symmetrically on either side of an axis whose projection in the plane XY is along the axis X, called guides along X,
- a second pair of waveguides consisting of a first and a second waveguide (CPWY'1, CPWY'2) that are coplanar, parallel to one another and arranged symmetrically on either side of an axis whose projection in the plane XY is along an axis Y', called guides along Y',

the guides along X being electrically insulated from the guides along Y,
the projections of the guides along X and the guides along Y' in the plane XY forming, at their intersection, a first parallelogram (P1) with a centre O and having a first surface (S1),

- a first conductive strip (W1) and a second conductive strip (W2) arranged such that their respective projection in the plane XY forms, at their intersection, a second parallelogram (P2) also with a centre O and having a second surface (S2), said strips being adapted to be flowed through by direct currents,
- an intersection between the first and the second surface being greater than or equal to 40% of the first surface (S1),

the method comprising, for measuring the rotational velocity along Z, the steps consisting of:

A Generating a cloud of said ultra-cold atoms (12), including phases of emitting said atoms, of cooling said atoms, of initialising said atoms in at least one internal state |a> and of trapping a cloud of said ultra-cold atoms in a local potential minimum, said trapping being achieved through the passage of direct currents through the first and the second strip,

B Initialising internal states by coherently superposing said ultra-cold atoms between said state |a> and an internal state |b> different from |a> through a first pulse $\pi/2$;

C Spatially separating a cloud of said atoms of said internal state |a> in a trap (T1) from a cloud of said atoms with said internal state |b> in another trap (T2), and moving said traps in an opposing direction following a closed path contained in a plane perpendicular to the measurement axis and initialised from the point O:

- by applying a predetermined microwave-frequency current or voltage to said waveguides in a predetermined sequence,
- and by applying a constant direct current or voltage value to the first and second strips,

D recombining said internal states |a> and |b> by applying to said ultra-cold atoms a second pulse $\pi/2$ then measuring the number of atoms in an internal state chosen from at least |a> and |b>;

E determining the Sagnac phase of said ultra-cold atoms and computing the rotational velocity of said sensor about said measurement axis.

17. The measurement method according to the preceding claim, for measuring a rotational velocity about the axis Z, wherein, during step C, said sequence includes applying, at certain times, a microwave signal formed by the superposition of a microwave signal with an angular frequency $\omega a$ and a microwave signal with an angular frequency $\omega b$ to one of the guides along X of the first pair, or applying a microwave signal formed by the superposition of a microwave signal with an angular frequency $\omega a'$ and a microwave signal with an angular frequency $\omega b'$ to one of the guides along Y' of the second pair.

18. The measurement method according to claim 16 for measuring a rotational velocity about the axis X or the axis Y', wherein, during step C, said sequence includes:

- to measure the rotational velocity about the axis X, applying, at certain times, a microwave signal formed by the superposition of a microwave signal with an angular frequency $\omega a$ and a microwave signal with an angular frequency $\omega b$, simultaneously to the two guides along X of the first pair,
- to measure the rotational velocity about the axis Y', applying, at certain times, a microwave signal formed by the superposition of a microwave signal with an angular frequency $\omega a'$ and a microwave signal with an angular frequency $\omega b'$, simultaneously to the two guides along Y' of the second pair.

FIG.1

FIG.2

FIG.3

FIG.4

FIG.5

FIG.6

Inactive CPW

wa CPW

wb CPW

$t_0$ CPWX2  W20  X  W10  CPWX1

$t_1$  N2  N1

$t_2$

$t_3$

$t_4$

$t_5$

$t_6$

N2  d  N1

Z  h2  h1  XY  Ach

FIG.7

FIG.8

FIG.9

FIG.10

FIG.11

ωa CPW
ωb CPW
ωa' + ωb' CPW

FIG.11bis

EP 4 102 182 B1

FIG.12

EP 4 102 182 B1

$P_{CPWX1}$

$P_{CPWX2}$

$P_{CPWY1}$

$P_{CPWY2}$

$I_{W2}$

$I_{W1}$

$t_0$   $t_1$   $t_2$   $t_3$   $t_4$   $t_5$   $t_6$

$\omega a'$ CPW

$\omega b'$ CPW

$\omega a + \omega b$ CPW

FIG.13

FIG.14

FIG.15

FIG.16

$I_{W1}$

$I_{W2}$

$P_{CPWY1}$

$P_{CPWY2}$

$P_{CPWX2}$

$P_{CPWX1}$

$t_0$  $t_1$  $t_2$  $t_3$  $t_4$  $t_5$  $t_5$

ωa CPW

ωb CPW

ωa' + ωb' CPW

EP 4 102 182 B1

48

FIG.17

FIG.18

$I_{W1}$

$I_{W2}$

$P_{CPWX1}$

$P_{CPWX2}$

$P_{CPWY1}$

$P_{CPWY2}$

$t_0$  $t_1$  $t_2$  $t_3$  $t_4$  $t_5$  $t_5$

$\omega a'$ CPW

$\omega b'$ CPW

$\omega a + \omega b$ CPW

FIG.19

FIG.20

EP 4 102 182 B1

FIG.21

FIG.22

FIG.23

FIG.24

FIG.25

FIG.26

FIG.27

FIG.28

FIG.29

EP 4 102 182 B1

FIG.30

EP 4 102 182 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2017089489 A

- FR 2004743

**Littérature non-brevet citée dans la description**

- **AMMAR et al.** Symmetric microwave potential for interferometry with thermal atoms on a chip. *Phys. Rev.*, 2015, vol. A91, 053623